# EUROPÄISCHE PATENTSCHRIFT

(11) **EP 3 123 042 B1**
(45) Veröffentlichungstag und Bekanntmachung des Hinweises auf die Patenterteilung: **14.11.2018**
(21) Anmeldenummer: 15719601.5
(22) Anmeldetag: 26.03.2015
(51) Int. Cl.: F16D 13/38

(54) **MEHRSCHEIBENKUPPLUNG**
MULTI-DISK CLUTCH
EMBRAYAGE À DISQUES MULTIPLES

(30) Priorität: 27.03.2014 DE 102014205773; 04.04.2014 DE 102014206549; 27.06.2014 DE 102014212482
(43) Veröffentlichungstag der Anmeldung: 01.02.2017
(73) Patentinhaber: Schaeffler Technologies AG & Co. KG, 91074 Herzogenaurach (DE)
(72) Erfinder: REIMNITZ, Dirk, 77815 Bühl (DE)
(86) Internationale Anmeldenummer: PCT/DE2015/200199
(87) Internationale Veröffentlichungsnummer: WO 2015/144170

(56) Entgegenhaltungen:
- WO-A1-03/081065
- DE-A1-102011 018 589

## Beschreibung

Die Erfindung betrifft eine Mehrscheibenkupplung, insbesondere Zweischeibenkupplung, mit deren Hilfe eine Antriebswelle eines Kraftfahrzeugmotors mit mindestens einer Getriebeeingangswelle gekuppelt werden kann, wobei die Mehrscheibenkupplung insbesondere für eine Doppelkupplung geeignet ist.

Trockene Doppelkupplung verfügen nach derzeitigem Stand der Technik meist über eine Scheibe je Teilkupplung. Diese Scheiben besitzen je zwei Reibflächen mit denen sie an ihren Nachbarbauteilen (z.B. Anpressplatte und Zentralpatte oder Gegenplatte) anliegen, wenn sie zur Momentenübertragung von der Kupplung eingespannt werden, und bilden so mit der Kupplung zwei Reibstellen aus. Das übertragbare Moment einer Kupplung lässt sich auch bei gleicher Anpresskraft, gleichem Durchmesser und gleichen Reibverhältnissen (Reibwert) steigern, indem man die Anzahl der Reibstellen erhöht. Dieses Prinzip wird häufig bei Lamellenkupplungen eingesetzt, wie sie beispielsweise auch bei nasslaufenden Doppelkupplungen verwendet werden. Als trockenlaufende Kupplungen sind Lamellenkupplungen für Fahrzeuganwendungen meist ungeeignet. Ohne Öl, das die Kupplung kühlt, überhitzen die dünnen Lamellen schnell, da sie zu wenig Wärmekapazität aufweisen. Außerdem lüften Lamellenkupplungen meist nicht richtig, wenn die Reibstellen zwischen den Lamellen und den Lamellenträgern nicht durch das Öl geschmiert werden. Um die Vorteile vieler Reibstellen pro Kupplung auch bei trockenlaufenden Doppelkupplungen nutzen zu können, gibt es mittlerweile Erfindungen, die einen Weg aufzeigen zwei oder mehr Scheiben in eine Teilkupplung zu integrieren und dies mit für Trockenkupplungen bewährten Teilen und Funktionsprinzipien realisieren.

Aus DE 10 2011 0185 589 A1 ist eine Zweischeibenkupplung bekannt, bei der eine Anpressplatte und eine Zwischenplatte jeweils über eine Blattfeder mit einer Gegenplatte verbunden sind. Bei einer axialen Verlagerung der Anpressplatte relativ zur Gegenplatte aus einer geöffneten Stellung der Zweischeibenkupplung heraus in eine geschlossene Stellung der Zweischeibenkupplung werden zwischen der Gegenplatte und der Zwischenplatte einerseits und zwischen der Zwischenplatte und der Anpressplatte andererseits vorgesehene Belagringe einer Kupplungsscheibe reibschlüssig verpresst. Die Zwischenplatte stützt sich über einen Kontaktbolzen mittig auf der Erstreckung der mit der Anpressplatte verbundenen Blattfeder ab, so dass der axiale Verlagerungsweg der Zwischenplatte immer halb so groß wie der Verlagerungsweg der Anpressplatte ist.

Aus der WO 03/081065 A1 ist ebenfalls eine Zweischeibenkupplung mit Zwischenplatte bekannt.

Es besteht ein ständiges Bedürfnis im Antriebsstrang eines Kraftfahrzeugs mit Hilfe einer Reibungskupplung ein besonders hohes Drehmoment bei unterschiedlichen Bauformen des Antriebsstrangs übertragen zu können.

Es ist die Aufgabe der Erfindung Maßnahmen aufzuzeigen, die eine Übertragung eines besonders hohen Drehmoments bei unterschiedlichen Bauformen eines Antriebsstrangs eines Kraftfahrzeugs mit Hilfe einer Reibungskupplung ermöglichen.

Die Lösung der Aufgabe erfolgt erfindungsgemäß durch eine Mehrscheibenkupplung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine Mehrscheibenkupplung, insbesondere Zweischeibenkupplung, zum Kuppeln einer Antriebswelle eines Kraftfahrzeugmotors mit mindestens einer Getriebeeingangswelle, insbesondere für eine Doppelkupplung, vorgesehen mit einer Gegenplatte zum Einleiten eines Drehmoments von der Antriebswelle, einer Kupplungsscheibe zum Ausleiten des Drehmoments an die Getriebeeingangswelle, wobei die Kupplungsscheibe einen ersten Belagring zur reibschlüssigen Drehmomentübertragung und einen relativ zum ersten Belagring axial verlagerbaren zweiten Belagring zur reibschlüssigen Drehmomentübertragung aufweist, einer relativ zur Gegenplatte axial verlagerbaren Zwischenplatte, wobei die Zwischenplatte in axialer Richtung zwischen dem ersten Belagring und dem zweiten Belagring angeordnet ist, und einer von einem Betätigungselement relativ zur Gegenplatte axial verlagerbaren Anpressplatte zum reibschlüssigen Verpressen der Kupplungsscheibe, wobei der erste Belagring in axialer Richtung zwischen der Anpressplatte und der Zwischenplatte und der zweite Belagring zwischen der Zwischenplatte und der Gegenplatte angeordnet sind, wobei eine Anzahl von n Zwischenplatten und eine Anzahl von n+1 Belagringen vorgesehen sind, wobei die Bewegung der Zwischenplatte in axialer Richtung mit der Bewegung der Anpressplatte über einen Koppelmechanismus in axialer Richtung gekoppelt ist, wobei zumindest in einer Teilstrecke zwischen einer der geöffneten Stellung der Mehrscheibenkupplung entsprechenden Öffnungsstellung der Anpressplatte und einer der geschlossenen Stellung der Mehrscheibenkupplung bei verschlissenen Belagringen entsprechenden maximalen Schließstellung der Anpressplatte ein aktuelles Wegübersetzungsverhältnis i(s_{A}) der axialen Verlagerung der Anpressplatte zu der axialen Verlagerung der in axialer Richtung von der Anpressplatte am weitesten entfernten Zwischenplatte bei einer axialen Position s_{A} der Anpressplatte von i(s_{A}) = n+1 abweicht und/oder ein aktuelles Wegübersetzungsverhältnis i(s_{A})ⱼ der axialen Verlagerung der Anpressplatte zu der axialen Verlagerung einer j-ten Zwischenplatte bei einer axialen Position s_{A} der Anpressplatte von i(s_{A})ⱼ = (n+1)/j abweicht, wobei j von der Gegenplatte aus in Richtung Anpressplatte gezählt ist.

Durch das von n+1 abweichende Wegübersetzungsverhältnis des Koppelmechanismus ist es beispielsweise bei einer Zweischeibenkupplung mit n = 1 möglich, dass der axiale Verlagerungsweg der Zwischenplatte nicht oder nicht immer halb so groß wie der Verlagerungsweg der Anpressplatte ist. Dadurch können die konstruktiven Anforderungen an die Kupplungsscheibe und/oder an die Betriebsweise der Mehrscheibenkupplung reduziert werden. Insbesondere ist es möglich für die unterschiedlichen Belagringe der Kupplungsscheibe unterschiedliche axiale Erstreckungen, unterschiedliche axiale Lüftmaße und/oder unterschiedliche axiale Komprimierbarkeiten vorzusehen und gleichzeitig einen im Wesentlichen zeitgleich einsetzenden Reibschluss der Belagringe sicherzustellen. Zusätzlich oder alternativ kann bewusst ein zeitlich versetzt eintretender Reibschluss der Belagringe vorgesehen sein, so dass beispielsweise mit Hilfe des zuerst reibenden Belagrings bereits ein eine erste Drehzahlanpassung im Schlupfbetrieb erfolgen kann bis auch über einen nachfolgend reibenden Belagring ein Drehmoment übertragen werden kann, wobei an dem nachfolgend in Reibkontakt kommenden Belagring bereits eine geringere maximale Drehzahldifferenz wirksam ist. Das Schließen der Mehrscheibenkupplung kann durch die sukzessive eintretende Wirksamkeit der Belagringe besonders sanft erfolgen, wobei durch die entsprechend hohe Anzahl der durch die Belagringe erreichten Reibpaarungen ein besonders hohes maximales Drehmoment übertragen werden kann. Hierbei können die Belagringe insbesondere auf ihre unterschiedliche Inanspruchnahme angepasst sein, indem beispielsweise der zuerst in Reibkontakt tretende Belagring besonders stark axial gefedert ist und/oder eine besonders große Reibbelagdicke aufweist. Durch das von n+1 abweichende Wegübersetzungsverhältnis des Koppelmechanismus kann die Mehrscheibenkupplung leicht an unterschiedlich dimensionierte Belagringe und/oder unterschiedliche beabsichtigte Betriebsweisen angepasst werden, so dass eine Übertragung eines besonders hohen Drehmoments bei unterschiedlichen Bauformen eines Antriebsstrangs eines Kraftfahrzeugs mit Hilfe einer Reibungskupplung ermöglicht ist.

Bei einer Mehrscheibenkupplung mit mehr als einer Zwischenplatte kann für das Wegübersetzungsverhältnis der j-ten Zwischenplatte gezählt von der Gegenplatte aus ein von i(s_{A})ⱼ = (n+1)/j verschiedenes Wegübersetzungsverhältnis gelten. Bei einer Zweischeibenkupplung kann das Wegübersetzungsverhältnis der einzigen Zwischenplatte (n = 1) von 2:1 verschieden sein. Bei einer Mehrscheibenkupplung mit n = 2 Zwischenplatten kann das Wegübersetzungsverhältnis der der Gegenplatte zugeordnete Zwischenplatte (j = 1) von 3:1 verschieden sein, während das Wegübersetzungsverhältnis der der Anpressplatte zugeordneten Zwischenplatte (j = 2) von 3:2 verschieden sein kann. Bei einer Mehrscheibenkupplung mit n = 3 Zwischenplatten kann das Wegübersetzungsverhältnis der der Gegenplatte zugeordnete Zwischenplatte (j = 1) von 4:1 verschieden sein, während das Wegübersetzungsverhältnis der in axialer Richtung nachfolgenden Zwischenplatte (j = 2) von 4:2 verschieden und das Wegübersetzungsverhältnis der in axialer Richtung weiter nachfolgenden Zwischenplatte (j = 3) von 4:3 verschieden sein kann, und so weiter. Ein ohne den Index j indiziertes Wegübersetzungsverhältnis i(s_{A}) betrifft die der Gegenplatte axial am nächsten gelegene Zwischenplatte, zwischen der und der Gegenplatte nur ein Belagring vorgesehen ist. Die axiale Position s_{A} der Anpressplatte wird beginnend von der Öffnungsstellung aus gemessen, in welcher sich die Anpressplatte unbewegt befindet, wenn die Mehrscheibenkupplung vollständig geöffnet ist. Wenn keine Betätigungskraft von dem Betätigungselement auf die Anpressplatte aufgebracht wird, kann sich die Anpressplatte in der Öffnungsstellung befinden, so dass die Mehrscheibenkupplung als "normally open" ausgestaltet ist, oder in einer Schließstellung befinden, so dass die Mehrscheibenkupplung als "normally closed" ausgestaltet ist. Das Betätigungselement kann beispielsweise als im Wesentlichen in axialer Richtung starrer Betätigungstopf oder als in axialer Richtung federnd nachgiebige Hebelfeder ausgestaltet sein. Das als Hebelfeder ausgestaltete Betätigungselement kann insbesondere schwenkbar an einem mit der Gegenplatte drehfest verbundenen Kupplungsdeckel gelagert sein. Das Betätigungselement ist vorzugsweise in der Art einer Tellerfeder ausgestaltet und weist insbesondere einen in Umfangsrichtung umlaufenden Tellerfederkörper zur Bereitstellung einer Tellerfedereigenschaft auf, wobei von dem Tellerfederkörper nach radial innen Federzungen abstehen können, an denen ein insbesondere hydraulisches Betätigungssystem in axialer Richtung zur Einleitung der Betätigungskraft angreifen kann.

Der Koppelmechanismus, über den die Bewegung der Zwischenplatte mit der Anpressplatte gekoppelt ist, kann auf einem Hebelprinzip beruhen, bei dem die Bewegung der Zwischenplatte über das aktuell eingestellte Hebelverhältnis mit der Bewegung der Anpressplatte verknüpft ist. Die Zwischenplatte kann über den Koppelmechanismus fest mit der Anpressplatte verbunden sein, so dass die Zwischenplatte von der Anpressplatte sowohl gedrückt aus auch gezogen werden kann. Insbesondere kann die Anpressplatte die Zwischenplatte gegen die Federkraft eines Federelements bei einem Schließen der Mehrscheibenkupplung die Zwischenplatte in axialer Richtung drücken, wobei bei einem Öffnen der Mehrscheibenkupplung die Zwischenplatteinfolge der angreifenden Federkraft der Bewegung der Anpressplatte folgen kann. Vorzugsweise ist eine mit der Anpressplatte verbundene, insbesondere als Blattfeder ausgestaltete, erste Rückstellfeder zum Verlagern der Anpressplatte in eine definierte, insbesondere geöffnete, Ausgangsstellung vorgesehen. Das von dem Koppelmechanismus eingestellte Wegübersetzungsverhältnis i(s_{A}) kann unabhängig von der axialen Position s_{A} der Anpressplatte konstant sein oder vorzugsweise in Abhängigkeit von der aktuellen axialen Position s_{A} der Anpressplatte unterschiedliche Werte annehmen.

Die Mehrscheibenkupplung ist insbesondere Teil einer Doppelkupplung, wobei insbesondere beide Reibungskupplungen der Doppelkupplung als Mehrscheibenkupplung ausgestaltet sind. Vorzugsweise werden die Gegenplatten der beiden Reibungskupplungen der Doppelkupplung durch eine gemeinsame Zentralplatte ausgebildet, so dass der axiale Bauraumbedarf der Doppelkupplung reduziert und/oder erforderlicher Bauraum für die Mehrscheibenkupplung(en) geschaffen werden kann. Ferner ist vorzugsweise eine mit der Zwischenplatte verbundene, insbesondere als Blattfeder ausgestaltete, zweite Rückstellfeder zum Verlagern der Zwischenplatte in eine definierte, insbesondere geöffnete, Ausgangsstellung vorgesehen. Die erste Rückstellfeder und/oder die zweite Rückstellfeder sind insbesondere zumindest mittelbar, vorzugsweise über einen mit der Gegenplatte fest verbundenen Kupplungsdeckel, mit der Gegenplatte verbunden. Dadurch sind insbesondere zwei zentrale Probleme gelöst. Erstens ist die Doppelkupplung trotz der zusätzlichen Scheiben und der zusätzlichen Platten der Mehrscheibenkupplungen axial nicht zu lang gebaut für die üblichen Doppelkupplungsbauräume. Zweitens können die Platten (Anpressplatten und Zwischenplatten) auch ohne Ölschmierung ein Lüften aller Scheiben und damit ein schleppmomentfreies Öffnen der Kupplung garantieren. Die Erfindung kann dazu einen auf Blattfedern beruhenden Führungsmechanismus für die Zwischenplatten vorsehen. Das Funktionsprinzip kann auf dem in DE 100 13 857 A1, DE 10 2011 018 589 A1 und DE 10 2011 086 929 A1 beschriebenen Funktionsprinzip basieren, auf deren Inhalt als Teil der Erfindung hiermit Bezug genommen wird, wobei durch die erfindungsgemäße Abwandlung verschiedene Konzepte geschaffen werden, mit denen sich die Anforderungen kompakter trockenlaufender Doppelkupplungen erfüllen lassen.

Die Anpressplatte und/oder die Zwischenplatte können insbesondere zur Drehmomentübertragung drehfest aber axial verschiebbar mit der Gegenplatte verbunden sein. Hierzu können die Anpressplatte und/oder die Zwischenplatte vorzugsweise an einem fest mit der Gegenplatte verbundenen Kupplungsdeckel axial geführt sein. Der jeweilige Belagring kann insbesondere einen in radialer Richtung verlaufenden Befestigungssteg aufweisen, der drehfest und gegebenenfalls axial relativ verschiebbar an der Kupplungsscheibe angebunden sein kann. Insbesondere ist an beiden Axialseiten des Befestigungsstegs jeweils mindestens ein Reibbelag vorgesehen. Der jeweilige Reibbelag kann über eine in axialer Richtung nachgiebige Belagfederung mit dem Befestigungsstegs verbunden sein, wobei insbesondere der Befestigungssteg selbst die Belagfederung ausbildet. Der Befestigungssteg kann hierzu einen in Umfangsrichtung betrachteten wellenförmigen Querschnitt aufweisen.

Insbesondere gilt für das aktuelle Wegübersetzungsverhältnis i(s_{A}) zumindest in einer Teilstrecke zwischen der Öffnungsstellung der Anpressplatte und der maximalen Schließstellung der Anpressplatte, insbesondere zumindest in einer Teilstrecke zwischen der Öffnungsstellung der Anpressplatte und einer der geschlossenen Stellung der Mehrscheibenkupplung bei unverschlissenen Belagringen entsprechenden Schließstellung der Anpressplatte, 0,00 < |i(s_{A}) - (n+1)|/(n+1) ≤ 5,0, insbesondere 0,01 ≤ |i(s_{A}) - (n+1)|/(n+1) ≤ 2,5, vorzugsweise 0,05 ≤ |i(s_{A}) - (n+1)|/(n+1) ≤ 1,5, weiter bevorzugt 0,07 ≤ |i(s_{A}) - (n+1)|/(n+1) ≤ 1,0 und besonders bevorzugt 0,10 ≤ |i(s_{A}) - (n+1)|/(n+1) ≤ 0,8. Bei einer derartigen Abweichung des Wegübersetzungsverhältnisses von n+1 können eine Vielzahl von in der Praxis relevanten Anforderungsprofile des Antriebsstrangs und/oder der konstruktiven Ausgestaltung der Kupplungsscheibe von der Mehrscheibenkupplung berücksichtigt werden.

Vorzugsweise ändert sich das aktuelle Wegübersetzungsverhältnis i(s_{A}) zwischen der Öffnungsstellung der Anpressplatte und der maximalen Schließstellung der Anpressplatte, insbesondere zwischen der Öffnungsstellung der Anpressplatte und einer der geschlossenen Stellung der Mehrscheibenkupplung bei unverschlissenen Belagringen entsprechenden Schließstellung der Anpressplatte, mindestens einmal, wobei insbesondere sich das aktuelle Wegübersetzungsverhältnis i(s_{A}) kontinuierlich ändert. Dadurch kann insbesondere automatisch auf einen Verschleiß von Reibbelägen der Belagringe reagiert werden. Beispielsweise kann zwischen der Öffnungsstellung der Anpressplatte und einer Schließstellung der Anpressplatte bei unverschlissenen Reibbelägen im Neuzustand ein erstes Wegübersetzungsverhältnis vorgesehen sein, während zwischen der Schließstellung der Anpressplatte bei unverschlissenen Reibbelägen und der maximalen Schließstellung der Anpressplatte am Ende des Verschleißbereichs der Reibbeläge ein von dem ersten Wegübersetzungsverhältnis verschiedenes zweites Wegübersetzungsverhältnis vorgesehen sein kann. Dadurch kann der auftretende Verschleiß der Reibbeläge bei der durch den Koppelmechanismus aufeinander abgestimmten Verlagerung der Anpressplatte und der Zwischenplatte für ein besonders komfortables Schließen der Mehrscheibenreibungskupplung optimal berücksichtigt werden. Zusätzlich ist es möglich durch die stufenweise und/oder stufenlose Änderung des aktuellen Wegübersetzungsverhältnisses eine Vielzahl von in der Praxis relevanten Anforderungsprofile des Antriebsstrangs und/oder der konstruktiven Ausgestaltung der Kupplungsscheibe von der Mehrscheibenkupplung zu berücksichtigen.

Besonders bevorzugt weist der erste Belagring eine erste Belagfederung und der zweite Belagring eine zweite Belagfederung auf, wobei die erste Belagfederung maximal um eine erste axiale Wegstrecke s_{BF1} und die zweite Belagfederung maximal um eine von der erste axiale Wegstrecke s_{BF1} verschiedene zweite axiale Wegstrecke s_{BF2} in axialer Richtung komprimierbar ist, wobei insbesondere 0,00 < 2|s_{BF1} - s_{BF2}|/(s_{BF1} + s_{BF2}) ≤ 2,0, vorzugsweise 0,05 ≤ 2|s_{BF1} - s_{BF2}|/(s_{BF1} + S_{BF2}) ≤ 1,7, weiter bevorzugt 0,10 ≤ 2|s_{BF1} - s_{BF2}|/(s_{BF1} + s_{BF2}) ≤ 1,5 und besonders bevorzugt 0,20 ≤ 2|s_{BF1} - s_{BF2}|/(s_{BF1} + s_{BF2}) ≤ 1,0 gilt. Durch das von n+1 abweichende Wegübersetzungsverhältnis ist es nicht erforderlich für die verwendeten Belagringe eine gleiche Belagfederung zu verlangen. Dadurch ist es möglich durch eine bewusste Verwendung von hineichend unterschiedlich wirkenden Belagfederungen eine individuell eingestellte Schließcharakteristik für die Mehrscheibenkupplung vorzusehen, wodurch sich weitere Komfortverbesserungen beim Schließen der Mehrscheibenkupplung realisieren lassen.

Insbesondere sind bei einer Bewegung der Anpressplatte von der Öffnungsstellung in einer der geschlossenen Stellung der Mehrscheibenkupplung bei unverschlissenen Belagringen entsprechenden Schließstellung der Anpressplatte der erste Belagring und der zweite Belagring zu unterschiedlichen Zeitpunkten reibschlüssig verpressbar und/oder das Verpressen zu unterschiedlichen Zeitpunkten beginnt und/oder endet. Durch den bewusst ein zeitlich versetzt eintretender Reibschluss der Belagringe kann beispielsweise mit Hilfe des zuerst reibenden Belagrings bereits ein eine erste Drehzahlanpassung im Schlupfbetrieb erfolgen bis auch über einen nachfolgend reibenden Belagring ein Drehmoment übertragen werden kann, wobei an dem nachfolgend in Reibkontakt kommenden Belagring bereits eine geringere maximale Drehzahldifferenz wirksam ist. Das Schließen der Mehrscheibenkupplung kann durch die sukzessive eintretende Wirksamkeit der Belagringe besonders sanft erfolgen, wobei durch die entsprechend hohe Anzahl der durch die Belagringe erreichten Reibpaarungen ein besonders hohes maximales Drehmoment übertragen werden kann.

Vorzugsweise weist der erste Belagring einen ersten Reibbelag mit einer wirksamen axialen ersten Reibbelagdicke d₁ und der zweite Belagring einen zweiten Reibbelag mit einer von der ersten Reibbelagdicke d₁ verschiedenen wirksamen axialen zweiten Reibbelagdicke d₂ auf, wobei insbesondere 0,0 < 2|d₁ - d₂|/(d₁ + d₂) < 2,0, vorzugsweise 0,01 ≤ 2|d₁ - d₂|/(d₁ + d₂) ≤ 1,8, weiter bevorzugt 0,05 ≤ 2|d₁ - d₂|/(d₁ + d₂) ≤ 1,5 und besonders bevorzugt 0,10 ≤ 2|d₁ - d₂|/(d₁ + d₂) ≤ 1,0 gilt. Dadurch kann insbesondere auf unterschiedliche auf die Belagringe wirkende Reibbelastungen, beispielweise wenn die Belagringe zeitlich zueinander versetzt reibschlüssig verpresst werden, eingegangen werden. Die unterschiedlichen Reibbelagdicken sind insbesondere derart bemessen, dass bei der durch den Koppelmechanismus eingestellten zu erwartenden Reibbelastung der Reibbeläge das Ende des Verschleißbereichs der Reibbeläge im Wesentlichen gleichzeitig erreicht wird.

Besonders bevorzugt ist vorgesehen, dass zur Ausbildung des Koppelmechanismus die Anpressplatte über eine erste Blattfeder mit der Gegenplatte verbunden ist, die Zwischenplatte über eine zweite Blattfeder mit der Gegenplatte verbunden ist und die Zwischenplatte über einen an der ersten Blattfeder oder der zweiten Blattfeder anliegenden Kontaktbolzen und/oder einem anderen eine Kontaktstelle ausbildenden Element an der Anpressplatte abgestützt ist. Wenn der Kontaktbolzen mit der Zwischenplatte verbunden ist, stützt sich der Kontaktbolzen an der ersten Blattfeder ab. Bei der kinematischen Umkehr, wenn der Kontaktbolzen mit der Anpressplatte verbunden ist, stützt sich der Kontaktbolzen an der zweiten Blattfeder ab. Dazu kann die zweite Blattfeder über die Verbindungsstelle zwischen der zweiten Blattfeder und der Zwischenplatte hinaus verlängert ausgestaltet sein, damit sich der Kontaktbolzen nicht zwischen den Verbindungsstellen der zweiten Blattfeder auf der zweiten Blattfeder abstützt, sondern sich der mit der Anpressplatte verbundene Kontaktbolzen auch außerhalb dieses Bereichs jenseits der Verbindungsstelle zur Zwischenplatte auf der zweiten Blattfeder abstützen kann. Die nachfolgend zur vereinfachten Darstellung anhand der ersten Alternative, bei welcher sich der Kontaktbolzen an der ersten Blattfeder abstützt, erläuterten Weiterbildungen gelten analog für die kinematische Umkehr der zweiten Alternative, bei welcher sich der Kontaktbolzen an cer zweiten Blattfeder abstützt. Ferner gelten die exemplarisch anhand des Kontaktbolzens erläuterten Weiterbildung analog für das von der Geometrie des Kontaktbolzens abweichenden die Kontaktstellen ausbildenden Element. Die erste Blattfeder kann insbesondere die Anpressplatte bei einer nicht angreifenden Betätigungskraft automatisch in eine definierte, insbesondere geöffnete, Ausgangsposition bewegen. Die zweite Blattfeder kann insbesondere die Zwischenplatte bei einer nicht angreifenden Betätigungskraft automatisch in eine definierte, insbesondere geöffnete, Ausgangsposition bewegen. Das Funktionsprinzip des Koppelmechanismus kann sich insbesondere an dem in DE 100 13 857 A1, DE 10 2011 018 589 A1 und DE 10 2011 086 929 A1 beschriebenen Funktionsprinzip orientieren, auf deren Inhalt als Teil der Erfindung hiermit Bezug genommen wird, wobei insbesondere der Kontaktbolzen zur Einstellung des gewünschten Wegübersetzungsverhältnisses entsprechend außermittig zur Erstreckung der abstützenden Blattfeder zwischen den Verbindungsstellen der Blattfeder anliegen kann. Der Koppelmechanismus kann dadurch sehr kompakt aufgebaut sein und für die Bewegungskoppelung der Zwischenplatte mit der Anpressplatte zu einem anderen Zweck sowieso vorgesehene Bauteile nutzen.

Insbesondere ist die Zwischenplatte zur Änderung des aktuellen Wegübersetzungsverhältnisses i(s_{A}) über mindestens zwei in Umfangsrichtung und/oder in radialer Richtung zueinander versetzte Kontaktstellen an der ersten Blattfeder abstützbar, wobei insbesondere die mindestens zwei Kontaktstellen Teil des gleichen Kontaktbolzens sind. Hierbei wird die Erkenntnis ausgenutzt, dass bei einer Verlagerung der Anpressplatte in axialer Richtung der mit der Anpressplatte verbundene Teil der ersten Blattfeder mitgenommen wird, während die entgegen gesetzte Verbindungsstelle in axialer Richtung feststehend ist. Dadurch erfährt die erste Blattfeder eine anteilige Schwenkbewegung in axialer Richtung, so dass sich der Winkel, unter dem die erste Blattfeder an dem Kontaktbolzen anliegt sich ändert. Durch eine entsprechende geometrische Ausgestaltung des Kontaktbolzens und/oder das Vorsehen mindestens eines weiteren Kontaktbolzens kann die erste Blattfeder bei der sich während der axialen Verlagerung der Anpressplatte in Schließrichtung sich verändernden Relativwinkellage zum Kontaktbolzen zunächst an der ersten Kontaktstellen und nachfolgend an der zweiten Kontaktstelle anliegen, wodurch das Wegübersetzungsverhältnis in Abhängigkeit von der axialen Position der Anpressplatte verändert werden kann.

Vorzugsweise weist der Kontaktbolzen eine zur ersten Blattfeder weisende, insbesondere im Wesentlichen konvexe, Kontaktkontur zur, insbesondere kontinuierlichen, Änderung des aktuellen Wegübersetzungsverhältnisses i(s_{A}) zumindest in einer Teilstrecke der axialen Verlagerung der Anpressplatte auf. Durch die geometrische Ausgestaltung der Kontaktkontur des Kontaktbolzens, insbesondere zur Ausbildung einer Mehrzahl von Kontaktstellen, kann die erste Blattfeder bei der sich während der axialen Verlagerung der Anpressplatte in Schließrichtung sich verändernden Relativwinkellage zum Kontaktbolzen an der Kontaktkontur abrollen, wodurch das Wegübersetzungsverhältnis in Abhängigkeit von der axialen Position der Anpressplatte, insbesondere kontinuierlich, verändert werden kann.

Besonders bevorzugt ist der Kontaktbolzen drehgesichert mit der Zwischenplatte verbunden. Der Kontaktbolzen kann insbesondere über eine von der Kreisform abweichende Querschnittkonturierung ein Verdrehsicherung mit der Zwischenplatte ausbilden. Dadurch kann der Kontaktbolzen in einer, vorzugsweise in nur genau einer, Relativwinkellage montiert werden. Dadurch kann eine korrekte Ausrichtung der mindestens einen Kontaktstelle und/oder der Kontaktkontur des Kontaktbolzens relativ zur ersten Blattfeder sichergestellt werden.

Insbesondere ist der Kontaktbolzen in axialer Richtung nachgiebig mit einer Federkraft vorgespannt und/oder der Kontaktbolzen ist mit einem Endanschlag versehen, wobei der Endanschlag die Bewegung des Kontaktbolzens in eine Axialrichtung sperrt und in eine entgegen gesetzte Axialrichtung zulässt. Bei einer zu starken auf den Kontaktbolzen wirkenden Axialkraft, insbesondere im geschlossenen Zustand der Mehrscheibenkupplung, kann der Kontaktbolzen wegfedern und/oder sich wegbewegen, so dass eine Beschädigung, beispielsweise durch eine plastische Deformation, der ersten Blattfeder vermieden werden kann.

Vorzugsweise biegt in der maximalen Schließstellung der Anpressplatte, insbesondere in einer der geschlossenen Stellung der Mehrscheibenkupplung bei unverschlissenen Belagringen entsprechenden Schließstellung der Anpressplatte, der Kontaktbolzen die erste Blattfeder in axialer Richtung durch. Der Kontaktbolzen kann dadurch die erste Blattfeder elastisch verbiegen, so dass eine besonders kompakte Ausgestaltung der Mehrscheibenkupplung mit einem geringen axialen Bauraumbedarf ermöglicht ist. Die axiale Elastizität der ersten Blattfeder kann dadurch zur Einsparung von Bauraum genutzt werden.

Besonders bevorzugt ist der Kontaktbolzen mit der Zwischenplatte vernietet, wobei eine die erste Blattfeder kontaktierende Kontaktstelle des Kontaktbolzens in radialer Richtung versetzt zu einem Nietschaft des Kontaktbolzens angeordnet ist, wobei insbesondere die Kontaktstelle in der Richtung der Nietschaftachse gesehen komplett neben dem Nietschaftquerschnitt liegt und/oder sich in Verlängerung des Nietschafts eine nur für die Montage genutzte Auflagefläche befindet, wobei die Auflagefläche den Nietschaftquerschnitt komplett abdeckt. Dadurch kann ein Nietwerkzeug, beispielsweise ein Nietstempel, im Wesentlichen koaxial zum Nietschaft angesetzt werden ohne beim Vernieten die Relativlage der Kontaktstelle durch eine plastische Verformung des Kontaktbolzens zu verändern. Der funktionsgemäße Betrieb der Mehrscheibenkupplung kann dadurch sichergestellt werden. Alternativ kann die Kontaktstelle in einer axialen Verlängerung des Nietschafts vorgesehen sein, wobei in diesem Falls, insbesondere symmetrisch zueinander angeordnete, Ansatzflächen zum Ansetzten des Nietwerkzeugs vorgesehen sind, so dass das Nietwerkzeug beim vernieten nicht direkt an der Kontaktstelle anliegt.

Die Erfindung betrifft ferner eine Doppelkupplung zum Kuppeln einer Antriebswelle eines Kraftfahrzeugmotors mit einer ersten Getriebeeingangswelle und/oder einer zweiten Getriebeeingangswelle, mit einer ersten Reibungskupplung zum Kuppeln der Antriebswelle mit der ersten Getriebeeingangswelle und einer zweiten Reibungskupplung zum Kuppeln der Antriebswelle mit der zweiten Getriebeeingangswelle, wobei die erste Reibungskupplung und/oder die zweite Reibungskupplung als eine Mehrscheibenkupplung, die wie vorstehend beschrieben aus- und weitergebildet sein kann, ausgestaltet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittdarstellung einer Doppelkupplung,
- Fig. 2:: eine schematische perspektivische Ansicht eines Teils der Doppelkupplung aus Fig. 1,
- Fig. 3:: eine schematische geschnittene Ansicht einer abgewickelten Darstellung einer Mehrscheibenkupplung der Doppelkupplung aus Fig. 1,
- Fig. 4:: eine schematische Schnittansicht der Mehrscheibenkupplung aus Fig. 3 in einer Öffnungsstellung,
- Fig. 5:: eine schematische Schnittansicht der Mehrscheibenkupplung aus Fig. 3 in einer teilweise geschlossenen Stellung,
- Fig. 6:: eine schematische Schnittansicht der Mehrscheibenkupplung aus Fig. 3 in einer Schließstellung im unverschlissenen Zustand,
- Fig. 7:: eine schematische Schnittansicht der Mehrscheibenkupplung aus Fig. 3 in einer maximalen Schließstellung im verschlissenen Zustand,
- Fig. 8:: eine schematische Schnittansicht einer ersten Ausführungsform einer erfindungsgemäßen Mehrscheibenkupplung in einer Öffnungsstellung,
- Fig. 9:: eine schematische Schnittansicht der Mehrscheibenkupplung aus Fig. 8 in einer teilweise geschlossenen Stellung,
- Fig. 10:: eine schematische Schnittansicht der Mehrscheibenkupplung aus Fig. 8 in einer Schließstellung im unverschlissenen Zustand,
- Fig. 11:: eine schematische Schnittansicht der Mehrscheibenkupplung aus Fig. 8 in einer maximalen Schließstellung im verschlissenen Zustand,
- Fig. 12:: eine schematische Schnittansicht einer zweiten Ausführungsform einer erfindungsgemäßen Mehrscheibenkupplung in einer Öffnungsstellung,
- Fig. 13:: eine schematische Schnittansicht der Mehrscheibenkupplung aus Fig. 12 in einer teilweise geschlossenen Stellung,
- Fig. 14:: eine schematische Schnittansicht der Mehrscheibenkupplung aus Fig. 12 in einer Schließstellung im unverschlissenen Zustand,
- Fig. 15:: eine schematische Schnittansicht der Mehrscheibenkupplung aus Fig. 12 in einer maximalen Schließstellung im verschlissenen Zustand,
- Fig. 16:: eine schematische Schnittansicht einer dritten Ausführungsform einer erfindungsgemäßen Mehrscheibenkupplung in einer Öffnungsstellung,
- Fig. 17:: eine schematische Schnittansicht der Mehrscheibenkupplung aus Fig. 16 in einer teilweise geschlossenen Stellung,

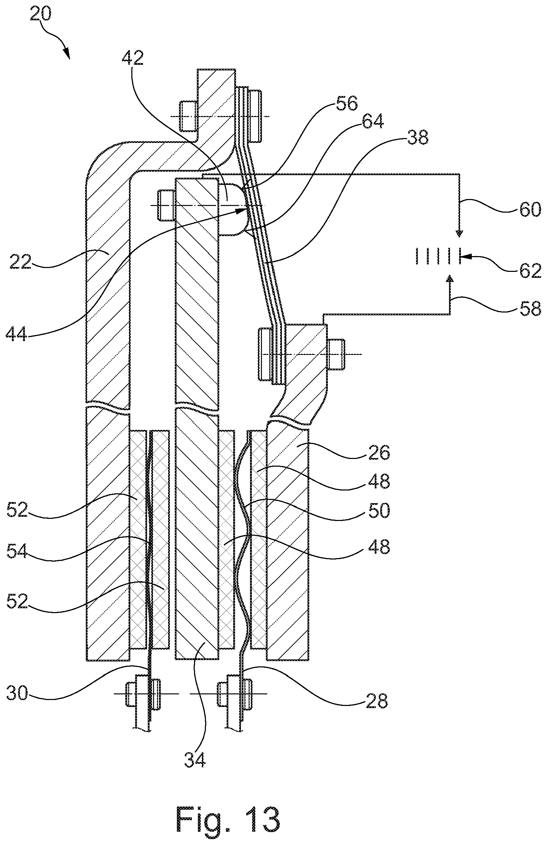

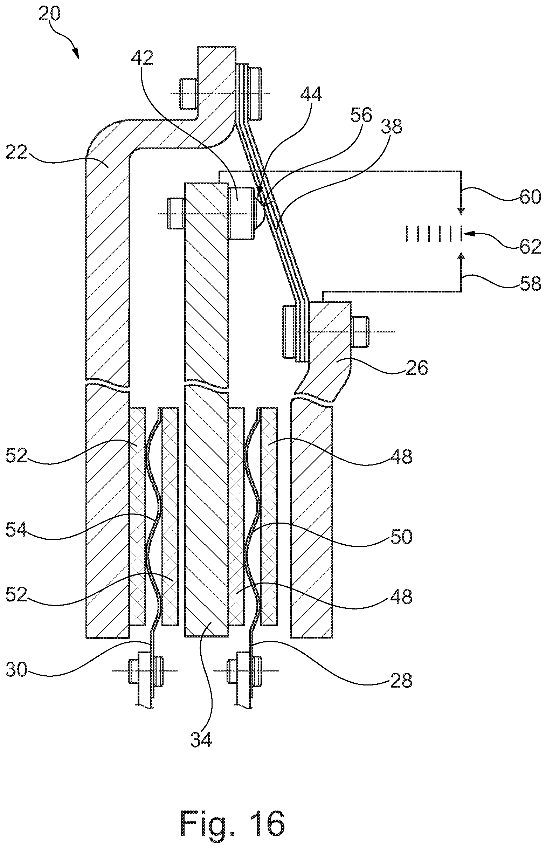

- Fig. 13:: eine schematische Schnittansicht der Mehrscheibenkupplung aus Fig. 16 in einer Schließstellung im unverschlissenen Zustand,

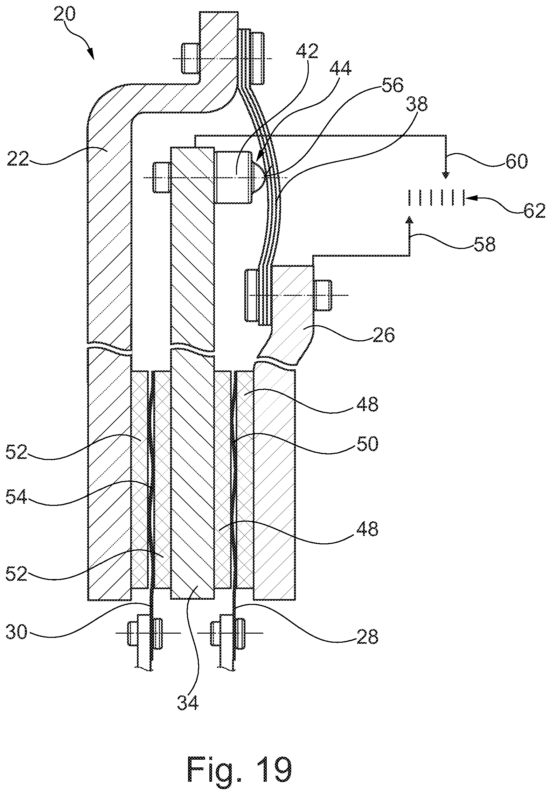

- Fig. 19:: eine schematische Schnittansicht der Mehrscheibenkupplung aus Fig. 16 in einer maximalen Schließstellung im verschlissenen Zustand,

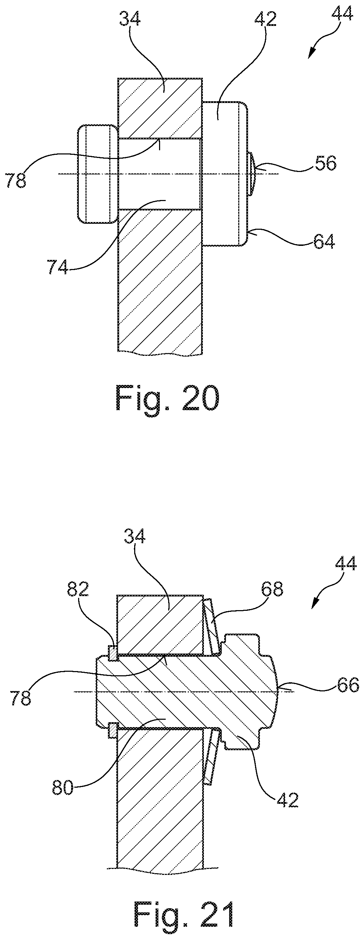

- Fig. 20:: eine schematische geschnittene Detailansicht einer vierten Ausführungsform einer erfindungsgemäßen Mehrscheibenkupplung,
- Fig. 21:: eine schematische geschnittene Detailansicht einer fünften Ausführungsform einer erfindungsgemäßen Mehrscheibenkupplung,

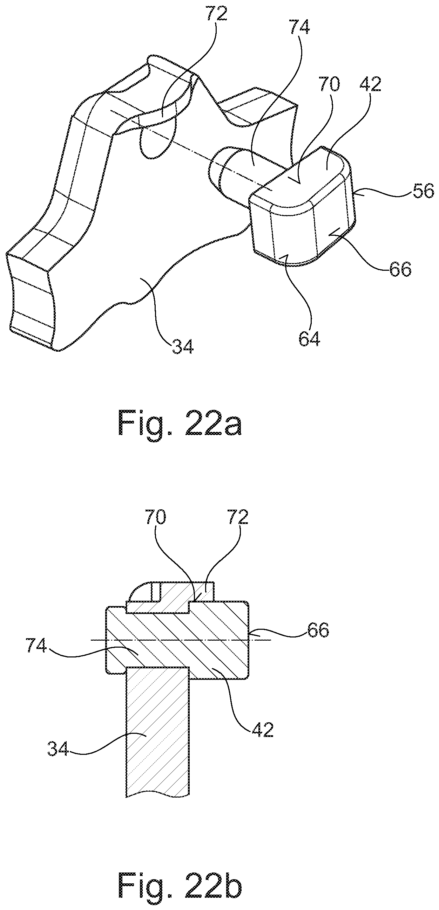

- Fig. 22a:: eine schematische perspektivische Detailansicht einer sechsten Ausführungsform einer erfindungsgemäßen Mehrscheibenkupplung,
- Fig. 22b:: eine schematische geschnittene Ansicht der Mehrscheibenkupplung aus Fig. 22a,

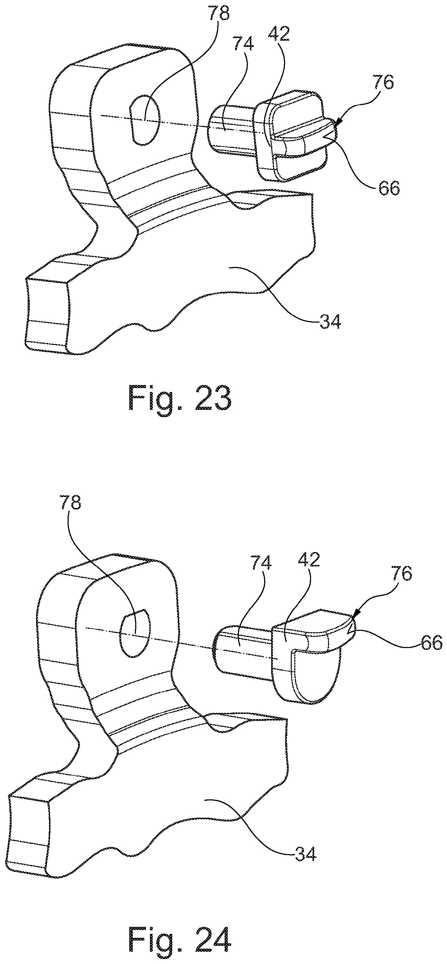

- Fig. 23:: eine schematische perspektivische Detailansicht einer siebten Ausführungsform einer erfindungsgemäßen Mehrscheibenkupplung und
- Fig. 24:: eine schematische perspektivische Detailansicht einer achten Ausführungsform einer erfindungsgemäßen Mehrscheibenkupplung.

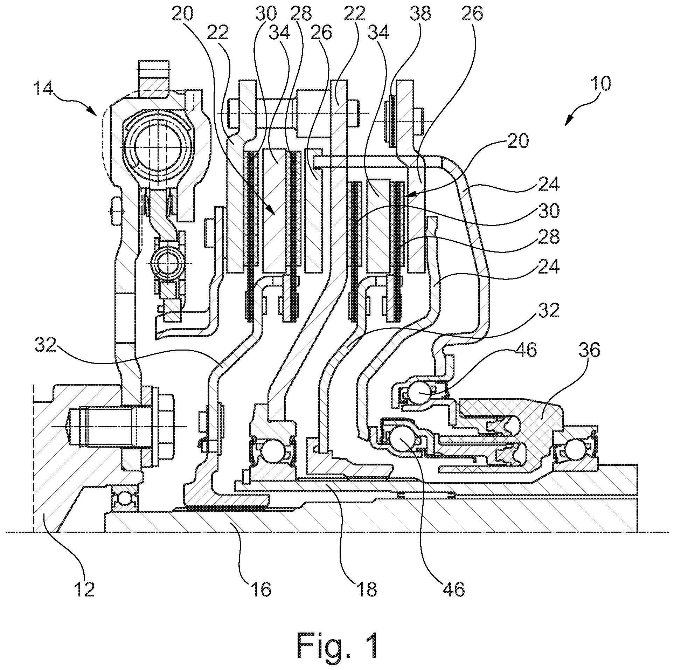

Die in Fig. 1 dargestellte Doppelkupplung 10 kann eine Antriebswelle 12 über einen als Zweimassenschwungrad ausgestalteten Drehschwingungsdämpfer 14 mit einer ersten Getriebeeingangswelle 16 und einer zweiten Getriebeeingangswelle 18 kuppeln. Hierzu ist jeweils eine Mehrscheibenkupplung 20 vorgesehen, die jeweils eine mit der Antriebswelle 12 gekoppelte Gegenplatte 22 und eine mit Hilfe eines als starrer Betätigungstopf ausgestalteten Betätigungselement 24 verlagerbare Anpressplatte 26 aufweist, wobei die Anpressplatte 26 auch eine zwischen einem ersten Belagring 28 und einem relativ zum ersten Belagring 28 axial verschiebbaren zweiten Belagring 30 einer Kupplungsscheibe 32 angeordnete Zwischenplatte 34 verpressen kann. Hierzu kann von einem hydraulischen Betätigungssystem 36 eine Betätigungskraft, insbesondere zum Schließen der Mehrscheibenkupplung 20, in das Betätigungselement 24 eingeleitet werden. Die Anpressplatte 26 ist über eine erste Blattfeder 38 und die Zwischenplatte 34 über eine zweite Blattfeder 40 zumindest mittelbar mit der Gegenplatte 22 verbunden. Mit der Zwischenplatte 34 ist ein die erste Blattfeder 38 kontaktierender Kontaktbolzen 42 verbunden, wodurch ein Koppelmechanismus 44 ausgebildet wird, der die Zwischenplatte 34 mit der Anpressplatte 26 in einem definierten Wegübersetzungsverhältnis bewegungskoppelt.

Nachfolgend sind verschiedene Konzepte vorgestellt, wie die Zwischenplatten 34 im richtigen Verhältnis dem Anpressplattenweg der Anpressplatte 26 nachgeführt werden können. Die Besonderheit der hier vorgestellten und auf Blattfedern 38, 40 beruhenden Koppelmechanismen 44 ist, dass sie auch bei Reibpaketen der Kupplungsscheibe 32 mit unterschiedlichen Scheiben- und Belagvarianten und/oder unterschiedlichen Abhüben pro Belagring 28, 30 die Zwischenplatten 34 exakt den Anforderungen entsprechend führen können. Des Weiteren wird auch ein Konzept vorgeschlagen, welches das Wegübersetzungsverhältnis zwischen dem Anpressplattenweg der Anpressplatte 26 und dem Zwischenplattenweg der Zwischenplatte 34 in Abhängigkeit von Verschleißzustand der Kupplung 20 ändert.

Der Grundaufbau der Mehrscheibendoppelkupplung 10 ist in Fig. 1 ersichtlich. Die Betätigungskräfte des Kupplungsbetätigungssystems 36 können über Betätigungslager 46 und über Drucktöpfe 24 auf die Anpressplatten 26 der Teilkupplungen 20 übertagen werden. Durch die so entstehende Anpresskraft wird dann das Reibpaket der jeweiligen Teilkupplung 20 zusammengepresst. Das Reibpaket weist die Anpressplatte 26, den ersten Belagring 28, die Zwischenplatte 34, den zweiten Belagring 30 und die axial feststehenden Gegenplatte 22 auf. Die beiden Belagringe 28, 30 einer Teilkupplung 20 bilden zusammen eine mehrteilige Kupplungsscheibe 32, die axial verlagerbar aber torsionssteif mit jeweils einer der Getriebeeingangswellen 16, 18 verbunden ist. Die Anpressplatte 26 und die Zwischenplatte 34 sind axial verlagerbar aber in radialer und tangentialer Richtung fest mit der Kupplung 20 verbunden. Da nur die Anpressplatte 26 aktiv von Betätigungssystem 36 bewegt wird, bewegt sich die Zwischenplatte 34 in Abhängigkeit von der Anpressplatte 26. Wie sich die Anpressplattenbewegung auf den Abhub (Als Abhub wird die Zunahme des Spaltmaßes zwischen den die Scheibe 28, 30 benachbarten Platten 22, 26, 34 bezeichnet, das über die gespannte Scheibendicke hinausgeht.) der beiden Scheiben 28, 30 aufteilt hängt von der Bewegung der Zwischenplatte 34 ab, die sich zwischen den beiden Scheiben 28, 30 des Reibpakets befindet. Wie sich die Zwischenplatte 34 relativ zur Anpressplatte 26 bewegt, hat somit großen Einfluss auf das Verhalten der Kupplung 20. Durch das richtige Bewegungsschema lässt sich sicherstellen, dass beide Belagringe 28, 30 der Kupplungsscheibe 32 richtig lüften (öffnen) können und wann während des Einkuppel- oder Auskuppelvorgangs die einzelnen Belagringe 28, 30 in Eingriff kommen oder wieder gelüftet werden. Da die Bewegung der Zwischenplatte 34 wichtig ist, sollte die Zwischenplatte 34 exakt in Abhängigkeit von der Anpressplattenbewegung geführt werden. Dazu wird nachfolgend der mechanischer Koppelmechanismus 44 in verschiedenen Ausführungsvarianten vorgestellt.

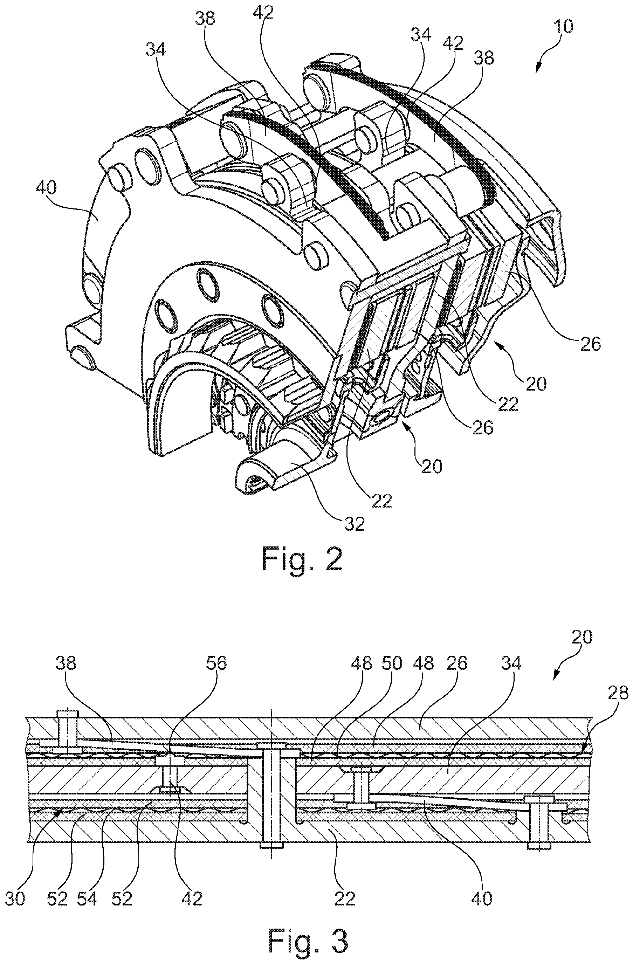

Wie in Fig. 2 gezeigt, sind die Zwischenplatten 34 und die Anpressplatten 26 über Blattfedern 38, 40 mit relativ zur Kupplung feststehenden Teilen verbunden. Die Blattfedern 38, 40 dienen zur Zentrierung der Platten 26, 34 und zur Drehmomentübertragung. Gleichzeitig sind die Blattfedern 38, 40 in axialer Richtung elastisch und ermöglichen so eine geführte axiale Verlagerung der Zwischen- und Anpressplatten 26, 34. Beide Platten 26, 34 weisen mehrere auf dem Umfang verteilte Blattfedern 38, 40 oder Blattfederpakete auf. Um die Zwischenplattenbewegung im richtigen Verhältnis mit der Anpressplattenbewegung zu synchronisieren, stützt sich die Zwischenplatte 34 auf einer oder mehreren ersten Blattfedern 38 der Anpressplatte 26 ab.

Das Grundprinzip zeigt die Fig. 3, in der schematisch die drei Platten Anpressplatte 26, Zwischenplatte 34 und Gegenplatte 22 dargestellt sind, zwischen denen sich die zwei Belagringe 28, 30 der Kupplungsscheibe 32 befinden. Der erste Belagring 28 weist eine beidseitig mit jeweils einem ersten Reibbelag 48 versehene erste Belagfederung 50 auf, während der zweite Belagring 30 eine beidseitig mit jeweils einem zweiten Reibbelag 52 versehene zweite Belagfederung 54 aufweist. Sowohl die Anpressplatte 26 als auch die Zwischenplatte 34 ist über eigene Blattfedern 38, 40 mit der relativ zur Kupplung feststehenden Gegenplatte 22 verbunden. Somit erfolgt die Kraftübertragung und die Zentrierung jeweils direkt zwischen der beweglichen Platte (Anpressplatte 26 oder Zwischenplatte 34) und den relativ zur Kupplung 20 feststehenden Bauteilen (hier dargestellt durch die Gegenplatte 22), ohne dass Tangentialkräfte und Zentrierwirkung von einer der beweglichen Platten 26, 34 auf die andere übertragen werden. Da die Fig. 3 nur einen Ausschnitt aus einer vereinfachten Abwicklung darstellt, ist jeweils nur eine Blattfeder 38, 40 sichtbar, welche die Anpressplatte 26 und die Zwischenplatte 34 hält. Es ist jedoch sinnvoll mehrere Blattfedern 38, 40 auf dem Umfang, insbesondere gleichmäßig, zu verteilen, die jeweils auf der einen Seite an der beweglichen Platte 26, 34 und auf der anderen Seite mit einem relativ zur Kupplung 20 feststehenden Bauteil verbunden sind. Drei auf dem Umfang verteilte Positionen haben sich für die Anordnung der Blattfedern 38, 40 besonders bewährt. Pro Position können auch mehrere Blattfedern 38, 40 übereinander (gestapelt) angeordnet werden. Wenn die zweiten Blattfedern 40, die die Zwischenplatte 34 halten, diese auch immer in Richtung der Anpressplatte 26 und somit in Öffnungsrichtung der Kupplung 20 kraftbeaufschlagen, reichen einfache Kontaktstellen 56 aus, um die Zwischenplatte 34 zu führen. Die Kontaktstellen 56 heben durch die Axialkraft der zweiten Blattfedern 40 bei geöffneter Kupplung 20 nicht von den ersten Blattfedern 38 ab. Nur bei ganz oder teilweise geschlossener Kupplung 20 kann der Kontakt abheben, wenn die Belagfederungen 50, 54 der beiden Belagringe 28, 30, die Zwischenplatte 34 in eine andere Position schieben, als in diesem Moment über die geometrische Wegkoppelung des Koppelmechanismus 44 mit Hilfe der Blattfedern 38, 40 vorgesehen ist.

Um insbesondere bei offener Kupplung 20 sicher zustellen, dass die Zwischenplatte 34 die richtige Position relativ zur Anpressplatte 26 und der Gegenplatte 22 einnimmt, ist ein Führungs- oder Koppelmechanismus 44 für die Zwischenplatte 34 mit Hilfe der Blattfedern 38, 40 ausgebildet. Wie die Fig. 3 zeigt, stützt sich die Zwischenplatte 34 auf einer oder mehreren ersten Blattfedern 38 der Anpressplatte 26 ab, um die Zwischenplattenbewegung im richtigen Verhältnis mit der Anpressplattenbewegung zu synchronisieren. Da die ersten Blattfedern 38 auf einer Seite mit einem axial feststehenden Kupplungsbauteil und auf der anderen Seite an der Anpressplatte 26 angebunden sind, führt jede erste Blattfeder 38 auf einer Seite keine und auf der anderen Seite die Axialbewegung der Anpressplatte 26 aus. Der Mittelbereich der ersten Blattfeder 38 führt eine geringere Bewegung aus, als die Anpressplatte 26. Wir groß diese Bewegung ist, hängt von der Umfangsposition ab. Je weiter man sich der Verbindungsstelle an der Anpressplatte 26 nähert, desto größer wird der Axialweg. Und Blattfederbereiche, die sich in der Nähe der axial feststehenden Verbindungsstelle befinden, führen fast keine Axialbewegung aus. Somit lässt sich das Verhältnis aus Anpressplattenbewegung und Zwischenplattenbewegung durch die Wahl der richtigen Abstützposition mit Hilfe des Kontaktbolzens 42 festlegen. Wird die Abstützstelle auf dem Umfang der Kupplung 20 in Richtung anpressplattenseitige Befestigung geschoben, erhöht sich der Zwischenplattenweg relativ zum Anpressplattenweg, und wird die Abstützstelle in die andere Richtung verlagert, in Richtung der festen Verbindungsstelle, verringert sich der Zwischenplattenweg. Die erste Blattfeder 38 fungiert hierbei ähnlich wie ein Hebel, der zur Wegübersetzung genutzt wird. Durch diesen Koppelmechanismus 44 der beiden beweglichen Platten 26, 34 wird sichergestellt, dass beim Öffnen der Kupplung 20 wirklich beide Belagringe 28, 30 einer Kupplungsscheibe 32 entlastet und gelüftet werden, und nicht etwa der eine Belagring 28, 30 zu viel und dafür der andere Belagring 30, 28 zu wenig gelüftet wird.

Die genaue Funktion der Zwischenplattenführung mit Hilfe des Koppelmechanismus 44 wird nun anhand der nachfolgenden Figuren beschrieben. Dazu wird eine Prinzipskizze benutzt, die die drei Platten Gegenplatte 22, Zwischenplatte 34 und Anpressplatte 26 sowie die beiden Belagringe 28, 30 zeigt. Diese im untern Bereich der Prinzipskizze abgebildeten Teile, entsprechen einem radialen Schnitt durch die Kupplung 20. Des Weiteren ist ein mehrere erste Blattfedern 38 aufweisendes erstes Blattfederpaket gezeigt, das die Anpressplatte 26 mit der Gegenplatte 22 verbindet und auf dem sich die Zwischenplatte 34 abstützen kann. Dieser obere Bereich der Prinzipskizze entspricht dem tangentialen Verlauf der Anordnung der ersten Blattfedern 38 in der Kupplung 20. Um die Bewegung der beweglichen Platten 26, 34 besser darstellen zu können, sind in der Figur die Anpressplatte 25 und die Zwischenplatte 34 noch jeweils mit einem gedanklich hinzugedachten Zeiger 58, 60 versehen, der die Bewegung bzw. die Positionsveränderung der Platten 26, 34 an einer gedanklich hinzugedachten feststehenden Skala 62 anzeigt.

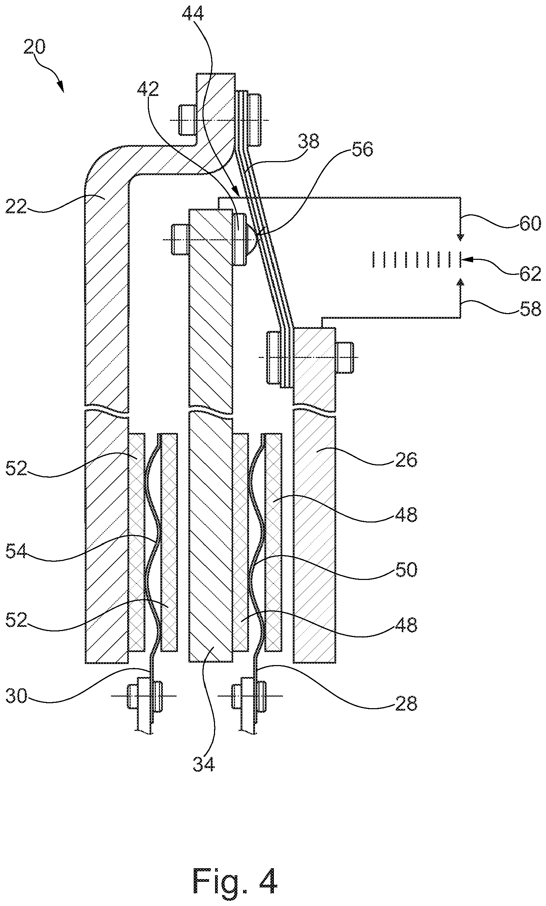

Die ersten Figuren 4 bis 7 zeigen die Funktion des als Blattfederführung ausgestalteten Koppelmechanismus 44 exemplarisch bei einer Kupplung 20 mit zwei baugleichen Belagringen 28, 30, bei denen die Belagfederung 50, 54, der erforderliche Lüftweg und der über Kupplungslebensdauer auftretende Belagverschleiß genau gleich ist. Eine besonders bevorzugte Ausführungsform der Erfindung wird erst anschließend erläutert, wenn die Lösungen für die ungleichen Belagringe 28, 30 vorgestellt werden. Zum leichteren Einstig und als Ausgangsbasis für die schwerer verständlichen Varianten, wird der Koppelmechanismus 44 für gleiche Belagringe 28, 30 hier jedoch trotzdem beschrieben.

Fig. 4 zeigt die Blattfederführung bei geöffneter Kupplung 20 in einer Öffnungsposition der Anpressplatte 26. Beide Belagringe 28, 30 sind komplett entlastet, so dass die Belagfederung 50, 54 ihre größte Dicke angenommen hat. Zusätzlich ist die Kupplung 20 gelüftet, so dass sowohl zwischen der Gegenplatte 22 und der Zwischenplatte 34, als auch zwischen der Zwischenplatte 34 und der Anpressplatte 26, ein größerer Abstand herrscht, als die ungespannte Dicke der Belagringe 28, 30 und somit mindestens auf einer Seite jedes Belagringes 28, 30 noch eine Lücke zwischen den Belagringen 28, 30 und ihren Nachbarbauteilen 22, 34, 26 existiert. Da es sich hierbei um eine Blattfederführung des Koppelmechanismus 44 für gleiche Belagringe 28, 30 handelt, stützt sich die Zwischenplatte 34 genau in der Mitte des freien, nicht von seinen Nachbarbauteilen 22, 26 unterstützten, Bereichs des ersten Blattfederpakets 38 ab. Die Kontaktstelle 56 ist bei dieser Ausführungsform durch einen als Niet mit gewölbtem Kopf ausgestalteten Kontaktbolzen 42 realisiert.

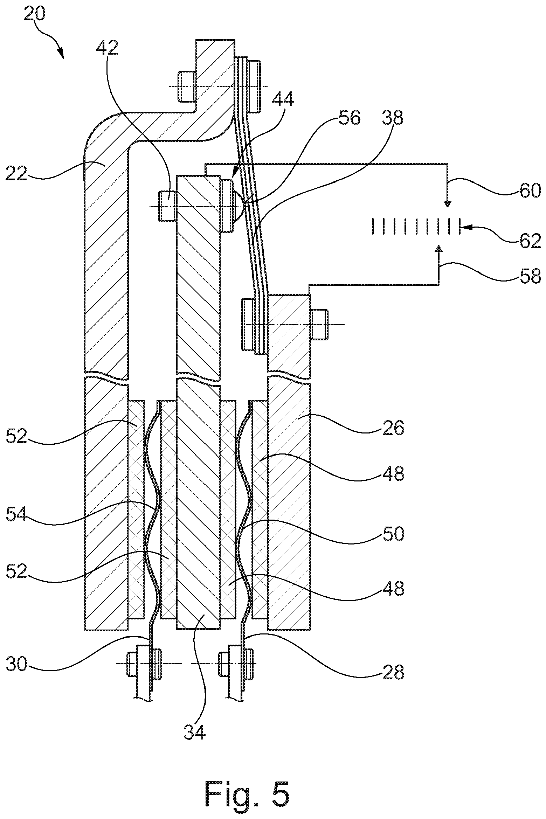

Die Fig. 5 zeigt die Blattfederführung 44 bei leicht eingerückter Anpressplatte 26. Da die Zwischenplatte 34 genau in der Mitte des Blattfederpakets 38 abgestützt wird, ist der Zwischenplattenweg grundsätzlich im Wesentlichen genau halb so groß wie der Anpressplattenweg. Dies zeigen auch die beiden Zeiger 58, 60 auf der Skala 62 an. Dadurch verringert sich der Abstand zwischen der Gegenplatte 22 und der Zwischenplatte 34 im gleichen Maße, wie der Abstand zwischen der Zwischenplatte 34 und der Anpressplatte 26. Bei dem abgebildeten Beispiel hat das nun dazu geführt, dass bei beiden Belagringen 28, 30 der Lüftweg verschwunden ist und die Belagringe 28, 30 nun auf beiden Seiten an ihren Nachbarbauteilen 22, 34, 26 anliegen.

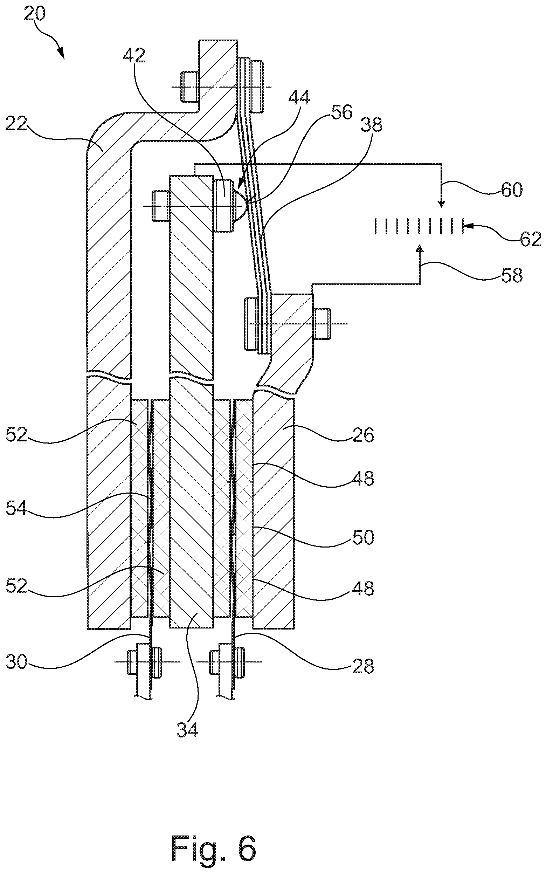

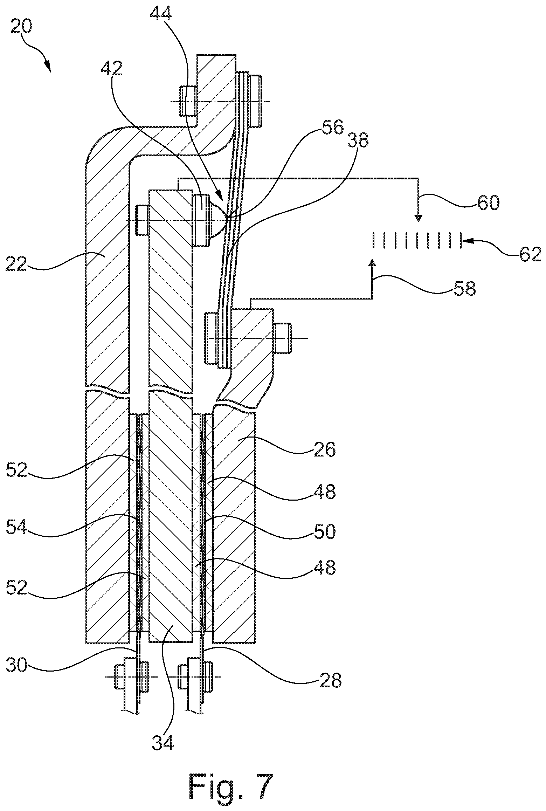

Bei der Fig. 6 wurde die Kupplung 20 noch weiter geschlossen, so dass auch die Belagfederung 50, 54 beider Belagringe 28, 30 zusammengedrückt wurde. Sobald die Belagfederungen 50, 54 der beiden Belagringe 28, 30 zusammengedrückt werden, wirken auch deren Kräfte in axialer Richtung auf die Zwischenplatten 34, und nicht nur die Kräfte der Blattfedern 38, 40 und des Koppelmechanismus 44. Bei gleichen Belagringen 28, 30 mit gleicher Belagfederung 50, 54 ist die Zwischenplatte 34 immer im axialen Kräftegleichgewicht, wenn die Belagfederungen 50, 54 der beiden Belagringe 28, 30 gleichweit zusammengedrückt werden. Dies ist der Fall, wenn sich die Zwischenplatte 34 immer halb so weit bewegt wie die Anpressplatte 26, wodurch bei diesem Beispiel das Kräftegleichgewicht der Belagfederungen 50, 54 die Zwischenplatte 34 immer in dieselbe Position stellen will, wie die Blattfederführung 44. Beide Mechanismen Blattfederführung 44 und Kräftegleichgewicht wirken daher problemlos zusammen. Dies gilt auch bei fortschreitendem Belagverschleiß, solange dieser an beiden Belagringen 28, 30 gleichermaßen stark auftritt (Fig. 7).

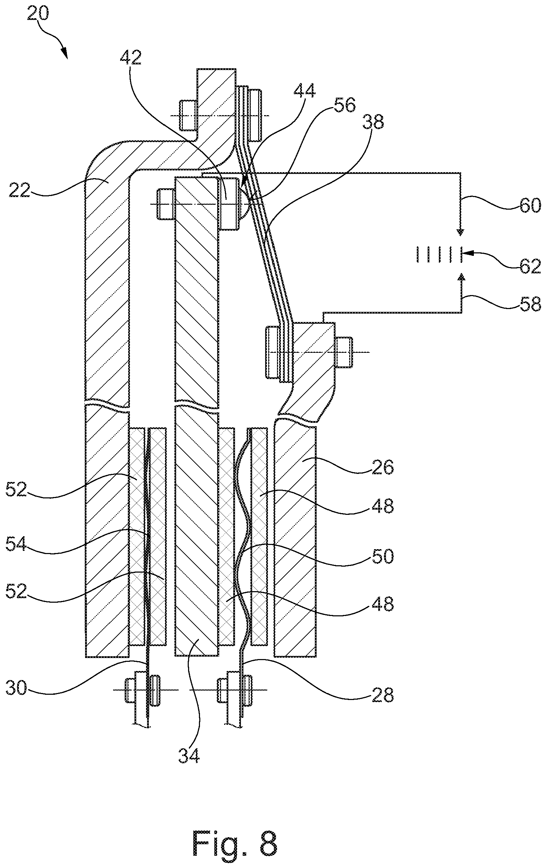

Eine bevorzugte Ausführungsform der Erfindung ist in den Fig. 8 bis 11 dargestellt, bei der eine Blattfederführung 44 für eine Kupplung 20 mit unterschiedlichen Belagringen 28, 30 dargestellt ist. Dazu ist exemplarisch der zweite Belagring 30 zwischen der Gegenplatte 22 und der Zwischenplatte 34 ohne oder nur mit einer sehr geringen zweiten Belagfederung 54 ausgestattet. Der erste Belagring 28 zwischen der Zwischenplatte 34 und der Anpressplatte 26 weist hingegen eine lange erste Belagfederung 50 auf. Wegen der unterschiedlich langen Belagfederungen 50, 54 benötigen die Belagringe 28, 30 nun auch unterschiedlich lange Abhübe, damit beide ausreichend weit, aber auch nicht unnötig weit, gelüftet werden können. Daher legt die Zwischenplatte 34 jetzt nicht mehr den halben Weg der Anpressplatte 26 zurück, sondern wird von dem Koppelmechanismus 44 so geführt, dass sie weniger als den halben Anpressplattenweg zurücklegt. Dafür stützt sich die Zwischenplatte 34 weiterhin auf dem freien Blattfederbereich zwischen den beiden Blattfederanbindungsstellen ab, die Abstützstelle wird aber so positioniert, dass ihr Abstand zur axial unbeweglichen Befestigungsstelle der ersten Blattfeder 38 mit der Gegenplatte 22 deutlich kürzer ist, als der Abstand zur beweglichen Verbindungsstelle der ersten Blattfeder 38 mit der Anpressplatte 26.

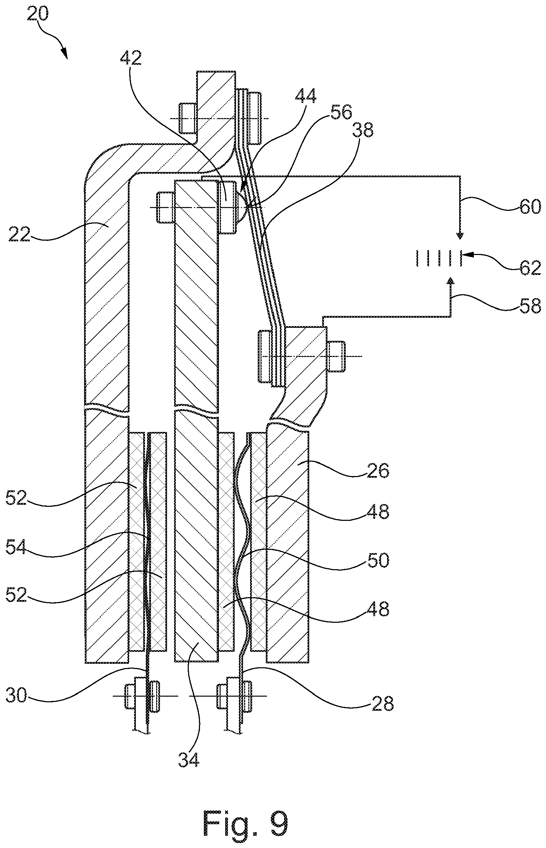

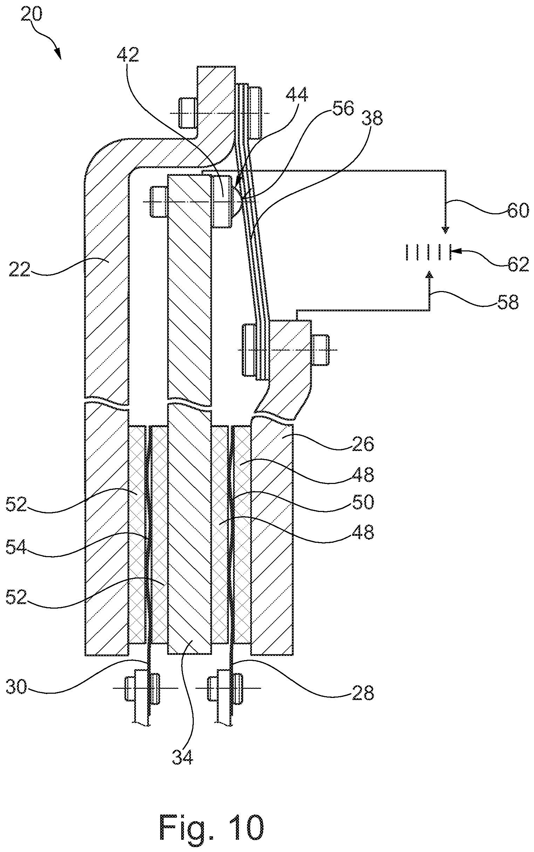

Wenn unterschiedliche Belagringe 28, 30 in einer Kupplung 20 verwendet werden, ist häufig nicht nur die Länge der Belagfederungen 50, 54 und/oder der Abhübe und/oder Lüftwege unterschiedlich, sondern es könne auch die Verhältnisse zwischen der Belagfederungslänge und dem Lüftweg unterschiedlich sein. Wenn dieses Verhältnis nicht gleich ist, kann mit dem in diesem Ausführungsbeispiel gezeigten Koppelmechanismus 44, der ein konstantes (oder näherungsweise konstantes) Wegübersetzungsverhältnis zwischen den beweglichen Platten 26, 34 sicherstellt, kein gleichzeitiger Beginn des Momentenaufbaus an beiden Belagringen 28, 30 garantiert werden ohne eine unerwünschte Verspannung des Koppelmechanismus 44 bei komplett geschlossener Kupplung in Kauf zu nehmen. Fig. 9 zeigt daher, dass bei diesem Ausführungsbeispiel bei leicht eingerückter Kupplung 20 zuerst der erste Belagring 28 mit der langen ersten Belagfederung 50 seine beiden Nachbarbauteile 26, 34 berührt, und der zweite Belagring 30 mit der kürzeren zweiten Belagfederung 54 noch nicht eingeklemmt ist. Dieser unterschiedliche Momentenaufbau ist bei diesem Ausführungsbeispiel absichtlich in Kauf genommen worden, damit der Koppelmechanismus 44 die Zwischenplatte bei komplett geschlossener Kupplung 20 so ausrichtet, dass die Kontaktstelle 56 (fast) kraftfrei an der ersten Blattfeder 38 anliegt. Dazu muss der Koppelmechanismus 44 die Zwischenplatte 34 genau in die Position des axialen Kräftegleichgewichts der beiden Belagfederungen 50, 54 und der Zwischenplattenblattfederkräfte stellen (Fig. 10). Man kann die Wegübersetzung des Koppelmechanismus 44 natürlich auch nur auf die Lüftwege der beiden Belagringe 28, 30 abstimmen, ohne die unterschiedliche Belagfederungslänge zu berücksichtigen, so dass der Momentenaufbau an beiden Belagringen 28, 30 gleichzeitig beginnt. Dann wird aber bei komplett geschlossener Kupplung 20 der Koppelmechanismus 44 nicht mehr kraftfrei, sondern wird durch die Belagfederungen 50, 54, welche die Zwischenplatte 34 in eine andere Position schieben wollen als der Koppelmechanismus 44, verspannt. Dies kann akzeptiert werden, wenn der Koppelmechanismus 44 dies erträgt (z.B. durch darauf abgestimmte erste Blattfedern 38 wie in Fig. 19 oder durch einen vorgespannten Kontaktbolzen 42 wie in Fig. 21).

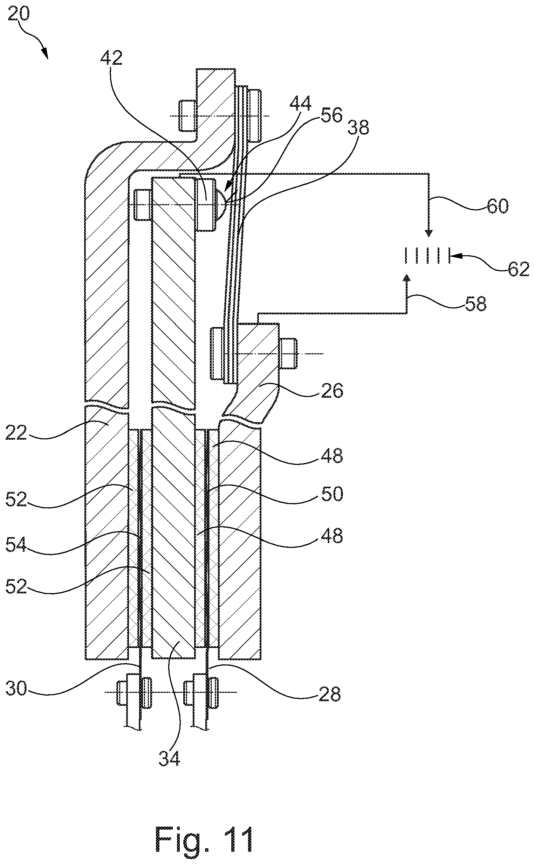

Die Wege, welche die Anpressplatte 26 und die Zwischenplatte 34 zurücklegen, ändern sich auch im Betrieb der Kupplung 20, da der Reibbelag 48, 52 der Belagringe 28, 30 verschleißt. Der Belagverschleiß an den beiden Belagringen 28, 30 einer Kupplungsscheibe 32 tritt meist gleichmäßig auf, so dass beide Belagringe 28, 30 mit der Zeit etwa um denselben Betrag dünner werden. Die Anpressplatte 26 muss daher immer weiter eingerückt werden, um das Reibpaket komplett zusammen zu pressen. Da jedoch der Koppelmechanismus 44 dieses Ausführungsbeispiels die Zwischenplatte 34 immer weniger als den halben Anpressplattenweg verschieben will, führt der Koppelmechanismus 44 die Zwischenplatte 34 nicht weit genug nach, um bei gleichem Belagverschleiß die Zwischenplatte 34 aktiv in die Gleichgewichtsposition der Belagfederungen 50, 54 und der Blattfederkräfte zu bringen. Die Folge ist ein Abheben der mit der Zwischenplatte 34 verbundenen Kontaktstellen 56 von den ersten Blattfedern 34 (Fig. 11).

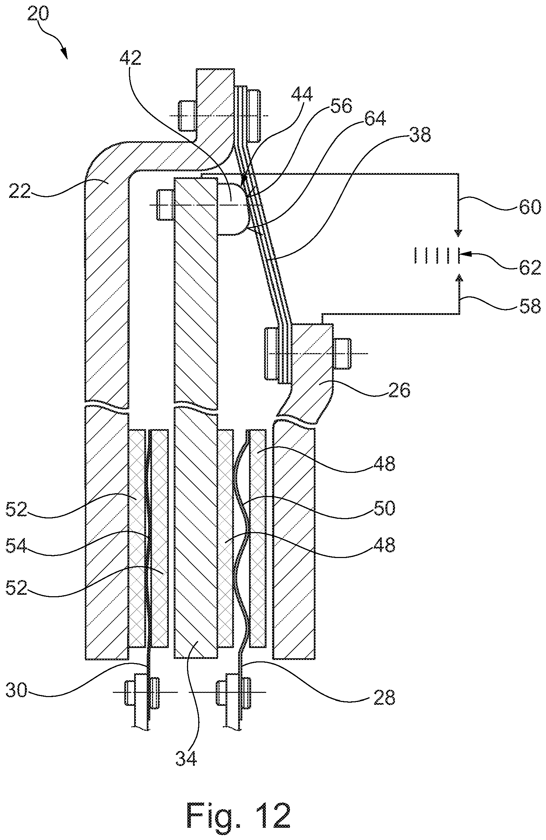

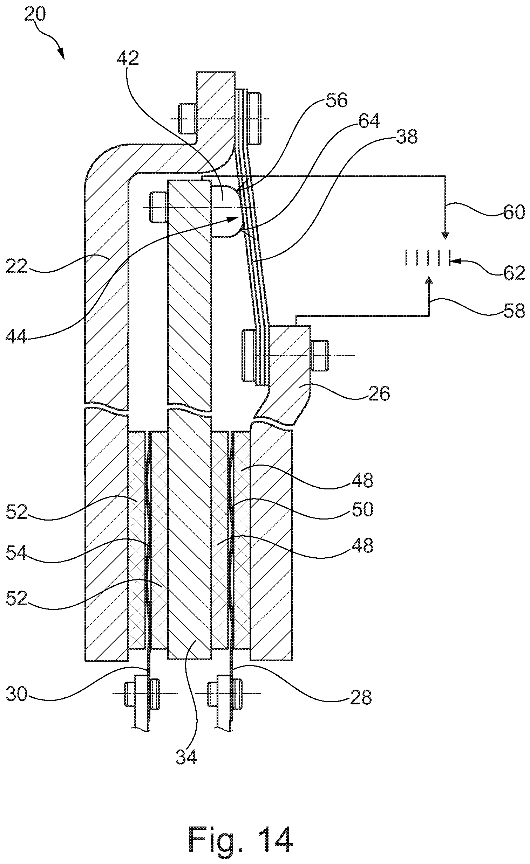

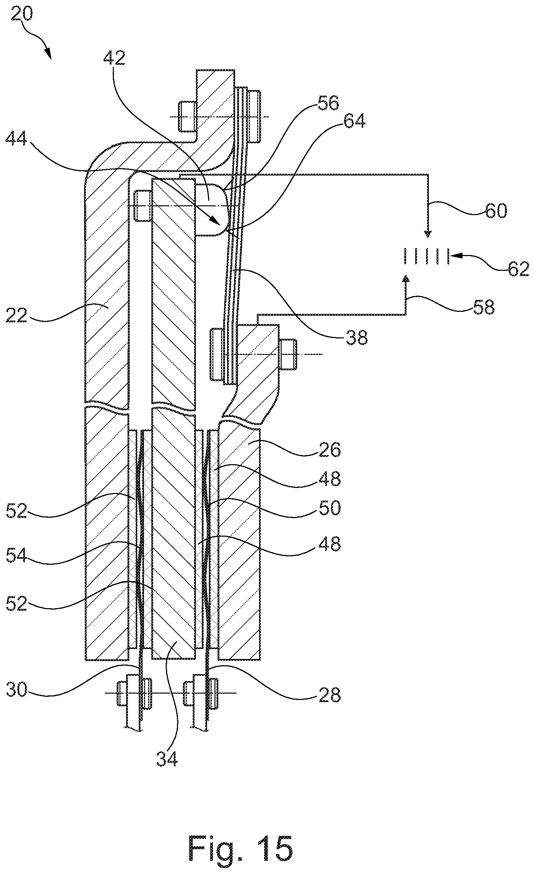

Wie die Beschreibung des in den Fig. 8 bis 11 dargestellten Ausführungsbeispiels gezeigt hat, lässt sich mit einer konstanten Wegübersetzung des Koppelmechanismus 44 nicht individuell auf Randbedingungen reagieren, welche die Wegverhältnisse zwischen den beiden Belagringen 28, 30 ändern. Abhilfe schafft ein Koppelmechanismus 44 mit veränderbarer Wegübersetzung. Diese Übersetzungsänderung kann beispielweise durch zwei Kontaktstellen 56, 64 pro Kontaktbolzen 42 zwischen der Zwischenplatte 34 und den ersten Blattfedern 38 erfolgen. Ab einem gewissen Einrückweg legt sich die erste Blattfeder 38 durch ihre Neigungsänderung an die bis dahin nicht tragende zweite Kontaktstelle 64 an und entlastet dafür die bis dahin in Kontakt befindliche erste Kontaktstelle 56. Da die beiden Kontaktstellen 56, 64 auf dem Umfang der Kupplung 20 versetzet sind und somit einen unterschiedlichen Abstand zu der axial feststehenden und der axial beweglichen Anbindung der ersten Blattfeder 38 aufweisen, ändert sich die Wegübersetzung des Koppelmechanismus 44. Das Funktionsprinzip ist in den Fig. 12 bis 15 dargestellt. Die Prinzipskizzen der Fig. 12 bis 14 unterscheiden sich von der in Fig. 8 bis 10 dargestellten Ausführungsform nur durch die zweite Kontaktstelle 64 des Kontaktbolzens 42. Die Belagringe 28, 30, die Anpressplattenwege, die Zwischenplattenweg und das Verhalten der Kupplung 20 sind genau wie zuvor beschrieben. Erst bei Verschleiß an den Reibbelägen 48, 52 kommt die zweite Kontaktstelle 64 zum Tragen. Und da der Wechsel der Kontaktstellen 56, 64 und dadurch der Wechsel der Wegübersetzung wegabhängig in Abhängigkeit von der axialen Position der Anpressplatte 26 erfolgt, wird eine wenig verschlissene Kupplung 20 auch nur wenig Weg mit der zweiten Wegübersetzungsstufe zurücklegen und eine stark verschlissene Kupplung 20 viel Weg. Das Verhältnis aus den Wegen, den die Zwischenplatte 34 mit dem ersten Wegübersetzungsverhältnis und dem zweiten Wegübersetzungsverhältnis zurücklegt, kann dadurch so abgestimmt werden, dass es immer dem Verhältnis aus Abhub im Neuzustand und der verschleißbedingten Abhubzunahme entspricht. Somit ist es möglich, dass sowohl bei neuer Kupplung 20 als auch bei komplett verschlissener Kupplung 20, der Koppelmechanismus 44 immer kraftfrei oder zumindest fast kraftfrei ist, wenn die Kupplung 44 für die maximale Momentenübertragung voll eingerückt wird und voll geschlossen ist.

Die Übersetzungsänderung der Wegübersetzung kann nicht nur durch zwei beabstandete Kontaktbereiche 56, 64 erzielt werden, sondern auch durch eine kontinuierliche Kontaktkontur 66, auf der die erste Blattfeder 38 je nach ihrer Winkellage an einer anderen Stelle anliegt. Durch die Form des Kontaktbolzens 42 lässt sich dann nicht nur die größte und die kleinste Wegübersetzung des Koppelmechanismus 44 festlegen, sondern auch den Verlauf der Übersetzungsänderung. Eine kontinuierliche Kontaktkontur 66 sorgt daher für eine kontinuierliche Übersetzungsänderung, bei der alle Zwischenwerte der Wegübersetzung vorkommen. Wann und wie schnell sich die Wegübersetzung ändert, lässt sich durch die dreidimensionale Form der Kontaktkontur 66 steuern. Um eine kontinuierliche Übersetzungsänderung mit ebenen ersten Blattfedern 38 zu erzielen, kommen insbesondere konvexe Kontaktkonturen 66 zum Einsatz. Alternativ kann der Kontaktbolzen 42 auch mit mehr als zwei Kontaktstellen 56, 64 ausgebildet werden, so dass auch mehr als zwei Übersetzungsstufen entstehen. Bei einem Koppelmechanismus 44 mit mehreren Übersetzungsstufen oder einer kontinuierlichen Übersetzungsänderung kann der Koppelmechanismus 44 beispielsweise zu Beginn des Einrückvorgangs ein Übersetzungsverhältnis bereitstellen, das auf die Lüftwege der beiden Belagringe 28, 30 abgestimmt ist. Anschließend kann sich das Übersetzungsverhältnis ändern, damit es für die beiden Belagfederungswege optimal abgestimmt ist und danach kann sich der Koppelmechanismus 44 mit einer erneuten Übersetzungsänderung auf den zu erwartenden Belagverschleiß einstellen.

Wie bei den vorhergehenden Ausführungsbeispielen beschrieben, ist es möglich, dass der Beginn des Momentenaufbaus bei den beiden Belagringen 28, 30 einer Teilkupplung 20 nicht gleichzeitig erfolgt. Da die Anzahl der wirksamen Reibflächen darüber entscheidet, wie viel Moment man bei einer bestimmten Anpresskraft übertragen kann, lässt sich durch den gleichzeitigen oder den versetzten Momentenaufbau die Kupplungseigenschaften stark beeinflussen. Je nach Anforderungen an die Kupplung 20, kann ein gleichzeitiger oder ein versetzter Beginn der Momentenübertragung sinnvoll sein. Wie der Momentenaufbau erfolgt, lässt sich durch die Wegübersetzung des Koppelmechanismus 44 und/oder die Abhublänge festlegen. So zeigt beispielsweise die Fig. 5 einen gleichzeitigen Momentenbeginn und die Fig. 9 und 13 Beispiele, bei welcher der anpressplattenseitige erste Belagring 28 zuerst in Eingriff kommt. Ein weiteres Ausführungsbeispiel, bei dem der zweite Belagring 30, der an der Gegenplatte 22 anliegt, zuerst in Eingriff kommt, zeigen die Fig. 16 bis 19. Um zu verdeutlichen, dass der unterschiedliche Momentenaufbau nicht nur mit unterschiedlichen Belagringen 28, 30 auftritt, werden in den Prinzipskizzen zwei gleiche Belagringe 28, 30 verwendet, wobei vorzugsweise unterschiedlich ausgeformte Belagringe 28, 30 verwendet werden.

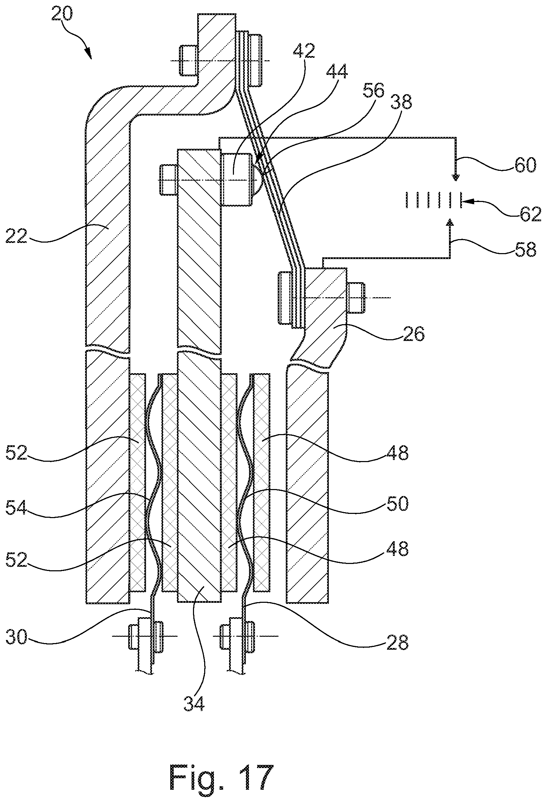

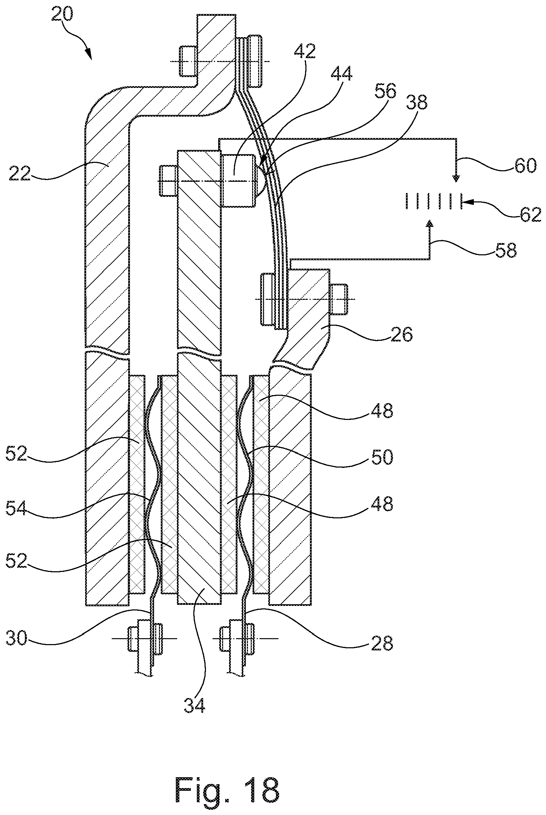

Damit der zweite Belagring 30 an der Gegenplatte 22 zuerst in Eingriff kommt, wird er zum einen weniger stark gelüftet wie der andere erste Belagring 28 an der Anpressplatte 26 und zum andern wird die Wegübersetzung des Koppelmechanismus 44 so abgestimmt, dass die Zwischenplatte 34 mehr als den halben Anpressplattenweg zurücklegt (Fig. 16 und 17). Beide Maßnahmen, die hier kombiniert werden, können auch einzeln zum gewünschten Resultat führen. Wird die Kupplung 20 nach dem Beginn der Momentenübertragung, die durch den an der Gegenplatte 22 anliegenden zweiten Belagring 30 hervorgerufen wird, weiter geschlossen, legt die Zwischenplatte 34 durch die sich nun einseitig aufbauende Belagfederungskraft nicht so viel Weg zurück, wie sie durch das Wegübersetzungsverhältnis des Koppelmechanismus 44 theoretisch müsste. Dadurch erhöht sich die Kraft an den Kontaktstellen 56 zwischen der Zwischenplatte 34 und den ersten Blattfedern 38, und die Bauteile, insbesondere die ersten Blattfedern 38, werden elastisch durchgebogen (Fig. 18). Wenn die ersten Blattfedern für diese zusätzliche Biegebelastung ausgelegt werden, könne auch längere Einrückwege, wie sie beispielsweite durch den Belagverschleiß auftreten, realisiert werden (Fig. 19). Alternativ kann die elastische Verformung auch auf zusätzliche Federelemente 68 verteilt werden. Die Fig. 21 zeigt hierfür beispielsweise einen in der Zwischenplatte 34 mit Hilfe des beispielsweise als Tellerfeder ausgestalteten Federelements 68 vorgespannten Kontaktbolzen 42. Übersteigt die Kontaktkraft, die der Kontaktbolzen 42 auf die ersten Blattfedern 38 ausübt, die Kraft des vorgespannten Federelements 68, so wird der Kontaktbolzen 42 relativ zur Zwischenplatte 34 verschoben und reduziert dadurch die Durchbiegung der ersten Blattfedern 38.

Bei den hier geschriebenen Koppelmechanismen 44, erfüllen die ersten Blattfeder 38, welche die Anpressplatte 26 halten, drei grundlegende Aufgaben. Sie halten und zentrieren die Anpressplatte 26, sie drücken die Anpressplatte 26 immer in Öffnungsrichtung und sie dienen als Übersetzungshebel für den Koppelmechanismus 44 der Zwischenplatte 34. Diese Aufgaben könne auch auf unterschiedliche Bauteile verteilt werden. Der Koppelmechanismus 44, wie er hier vorgestellt wird, weist ein Übersetzungselement auf, das auf der einen Seite mit einem relativ zur Kupplung 20 axial feststehenden Bauteil verbunden ist und auf der anderen Seite mit der Anpressplattenbewegung mitbewegt wird, damit zwischen den beiden äußeren Anbindungsstellen der richtige Axialweg für die Zwischenplatte 34 abgegriffen werden kann. Ob dieses Koppelelement eine Blattfeder 38 ist oder ein anders ausgebildetes hebelähnliches Element, ist für die Funktionsweise des Koppelmechanismus 44 nicht entscheidend. Eine oder mehrere Blattfedern 38, 40 können auch dann als Übersetzungselement genutzt werden, wenn sie die anderen zuvor aufgezählten kupplungsrelevanten Funktionen nicht erfüllen. Ferner kann der Kontaktbolzen 42 oder ein anderes Koppelelement mit der Anpressplatte 26 verbunden sein und sich an der mit der Zwischenplatte 34 verbundenen zweiten Blattfeder 40 abstützen. Ferner kann im Vergleich zu der exemplarisch anhand einer Zweischeibenkupplung ausgestalteten Kupplung 20 mehr als eine Zwischenplatte 34 vorgesehen sein, die über einen der vorstehend beschriebenen Koppelmechanismen 44 entsprechend mit der Anpressplatte 26 gekoppelt sein kann.

Bei den Kontaktstellen 56, 64 zwischen den Zwischenplatten 34 und den ersten Blattfedern 38, welche die Anpressplatten 26 fixieren, kommt es im Grunde nicht auf die Ausgestaltungsform sondern nur auf den Kontakt an, damit die ersten Blattfedern 38 die Zwischenplatte 34 in axialer Richtung bewegen können. Trotzdem gibt es natürlich einige technisch besonders sinnvolle Lösungen, wie die nachfolgend vorgestellten Varianten.

Fig. 20 zeigt den in den vorherigen Figuren schon mehrfach als Abstützniete ausgestalteten Kontaktbolzen 42. Die Niete 42 lässt sich leicht mit sehr unterschiedlichen Zwischenplatten 34 und Zwischenplattenwerkstoffen verbinden. Außerdem kann die Niete 42 sehr einfach gehärtet, beschichtet oder aus einem besonders harten oder gleitfähigen Material hergestellt werden. Dadurch lässt sich die Kontaktstelle 56 robust und verschleißarm herstellen und die reibungsbedingte Hysterese verringern. Das Ausführungsbeispiel zeigt eine Niete mit zwei Kontaktstellen 56, 64. Sowohl die zentrische Erhöhung als auch der Rand des Nietkopfes lässt sich als Kontaktstelle 56, 64 nutzen. Es können entweder einer oder beide Kontaktstellen 56, 64 realisiert und verwendet werden. Eine Niete 42 mit zwei Kontaktstellen 56, 64 ist besonders für Koppelmechanismen 44 mit veränderbarer Übersetzung interessant, da dadurch nicht zwei einzelne Niete 42 nebeneinander gesetzt werden müssen. Außerdem kann durch eine kontinuierliche Übergangskontur 66 zwischen den beiden maximal auseinander liegenden Kontaktstellen 56, 64 auch eine kontinuierliche Übersetzungsänderung der Wegübersetzung ermöglicht und beeinflusst werden.

Statt rotationssymmetrischer Niete kann der Kontaktbolzen 42 auch als Formniete ausgestaltet sein, die der ersten Blattfeder 38 eine größere Auflagefläche bieten und einen Linienkontakt ermöglichen kann. Wenn die Niete 42 nicht mehr rotationssymmetrisch ist, sollte diese aber richtige orientiert mit der Zwischenplatte 34 verbunden werden, um die richtige Zwischenplattenposition und die gewünschte Wegübersetzung zu erzielen. Die Fig. 22a und 22b zeigen beispielhaft die Formniete 42 mit den zwei Kontaktstellen 56, 64, die bereits aus dem Ausführungsbeispiel mit veränderbarer Übersetzung (Fig. 12 bis 15) bekannt ist. In den Dateilabbildungen sieht man, wie die Formniete 42 über eine Außenkontur 70 ihres nicht runden Kopfes an einem axial abstehenden Steg 72 der Kontur der Zwischenplatte 34 ausgerichtet werden kann. Der Steg 72 der Zwischenplatte 34 erleichtert die Montageausrichtung und verhindert auch im Betrieb der Kupplung 20, dass sich die Niete 42 ungewollt verdrehen kann.

Zwei weitere Ausführungsbeispiele, bei denen die Niete 42 durch einen abgeflachten Nietschaft 74 ausgerichtet werden, zeigen die Fig. 23 und 24. Die Nietköpfe weisen einen die Kontaktkontur 66 ausbildenden axial abstehenden Kontaktsteg 76 auf, mit dem sich die Zwischenplatten 34 auf den ersten Blattfedern 38 abstützen können. Durch die Kontaktkontur 66 des Kontaktsteges 76 lässt sich der Verlauf der Wegübersetzung steuern. Durch eine kontinuierliche, insbesondere meist konvexe, Krümmung des Kontaktsteges 76 lässt sich sehr einfach eine kontinuierliche Wegübersetzungsänderung hervorrufen, die insbesondere an die Belagfederungen 28, 30, die Lüftwege und die Belagverschleißraten angepasst werden kann. Damit der Kontaktsteg 76 während des Vernietens der Niete 42 nicht beschädigt wird, kann sich der Nietstempel neben der Kontaktkontur 66, welche die ersten Blattfedern 38 nutzen, auf dem Nietkopf abstützen. Die Auflageflächen für das Vernieten können sich beiderseits des Kontaktstegs 76 befinden (Fig. 23). Alternativ kann auch eine einzelne Abstützfläche für den Vernietungsprozess auf einer Seite des Kontaktsteges 76 vorgesehen werden (Fig. 24). Dabei ist es zweckmäßig den Kontaktsteg 76 nicht direkt in Verlängerung der Achse des Nietschafts 74 anzuordnen, damit die Abstützfläche den Nietschaft 74 zu einem Großteil oder komplett überdecken kann.

Fig. 21 zeigt einen Kontaktbolzen 42, der axialverschiebbar in einer Öffnung 78 der Zwischenplatte34 eingesetzt ist. Auf der einen Seite der Zwischenplatte 34 ist der Bolzenschaft 80 mit einem Sicherungsring 82 versehen, der als Anschlag dient und sich an der Zwischenplatte 34 abstützt. Auf der anderen Seite befindet sich der Bolzenkopf mit der Kontaktkontur 66. Zwischen dem Bolzenkopf und der Zwischenplatte 34 befindet sich eine vorgespannte Tellerfeder 68, die den Kontaktbolzen 42 gegen den durch den Sicherungsring 82 gebildeten Anschlag drückt. Durch die Vorspannkraft der Tellerfeder 68, wirkt der Kontaktbolzen 42 wie eine starre Kontaktstelle 56 und erfüllt alle zuvor für die Kontaktstellen 56, 64 beschriebenen Eigenschaften, solange die Kontaktkraft nicht die Vorspannkraft der Tellerfeder 68 überschreitet. Ist dies der Fall, wird der Kontaktbolzen 42 relativ zur Zwischenplatte 34 verschoben. Dadurch lassen sich die maximal von dem Koppelmechanismus 44 auf die Zwischenplatte 34 ausgeübten Axialkräfte begrenzen und/oder Wegverhältnisse kraftabhängig verändern.

Blattfedern 38, 40 werden wegen ihrer geringen Reibung hauptsächlich in trockenen Doppelkupplungen 10 eingesetzt. Alle hier vorgestellten Konzepte lassen sich aber auch in nasslaufenden Kupplungen einsetzen.

Blattfedern 38, 40 werden wegen ihrer geringen Reibung hauptsächlich in trockenen Doppelkupplungen 10 eingesetzt. Alle hier vorgestellten Konzepte lassen sich aber auch in nasslaufenden Kupplungen einsetzen.

### Bezugszeichenliste

- 10: Doppelkupplung
- 12: Antriebswelle
- 14: Drehschwingungsdämpfer
- 16: erste Getriebeeingangswelle
- 18: zweite Getriebeeingangswelle
- 20: Mehrscheibenkupplung
- 22: Gegenplatte
- 24: Betätigungselement
- 26: Anpressplatte
- 28: erster Belagring
- 30: zweiter Belagring
- 32: Kupplungsscheibe
- 34: Zwischenplatte
- 36: Betätigungssystem
- 38: erste Blattfeder
- 40: zweite Blattfeder
- 42: Kontaktbolzen
- 44: Koppelmechanismus
- 46: Betätigungslager
- 48: erster Reibbelag
- 50: erste Belagfederung
- 52: zweiter Reibbelag
- 54: zweite Belagfederung
- 56: Kontaktstelle
- 58: erster Zeiger
- 60: zweiter Zeiger
- 62: Skala
- 64: zweite Kontaktstelle
- 66: Kontaktkontur
- 68: Federelement
- 70: Außenkontur
- 72: Steg
- 74: Nietschaft
- 76: Kontaktsteg
- 78: Öffnung
- 80: Bolzenschaft
- 82: Sicherungsring

## Patentansprüche

1. Mehrscheibenkupplung, insbesondere Zweischeibenkupplung, zum Kuppeln einer Antriebswelle (12) eines Kraftfahrzeugmotors mit mindestens einer Getriebeeingangswelle (16, 18), insbesondere für eine Doppelkupplung (10), mit
einer Gegenplatte (22) zum Einleiten eines Drehmoments von der Antriebswelle (12), einer Kupplungsscheibe (32) zum Ausleiten des Drehmoments an die Getriebeeingangswelle (16, 18), wobei die Kupplungsscheibe (32) einen ersten Belagring (28) zur reibschlüssigen Drehmomentübertragung und einen relativ zum ersten Belagring (28) axial verlagerbaren zweiten Belagring (30) zur reibschlüssigen Drehmomentübertragung aufweist,
einer relativ zur Gegenplatte (22) axial verlagerbaren Zwischenplatte (34), wobei die Zwischenplatte (34) in axialer Richtung zwischen dem ersten Belagring (28) und dem zweiten Belagring (30) angeordnet ist, und
einer von einem Betätigungselement (24) relativ zur Gegenplatte (22) axial verlagerbaren Anpressplatte (26) zum reibschlüssigen Verpressen der Kupplungsscheibe (32), wobei der erste Belagring (28) in axialer Richtung zwischen der Anpressplatte (26) und der Zwischenplatte (34) und der zweite Belagring (30) zwischen der Zwischenplatte (34) und der Gegenplatte (22) angeordnet sind,
wobei eine Anzahl von n Zwischenplatten (34) und eine Anzahl von n+1 Belagringen (28, 30) vorgesehen sind,
wobei die Bewegung der Zwischenplatte (34) in axialer Richtung mit der Bewegung der Anpressplatte (26) über einen Koppelmechanismus (44) in axialer Richtung gekoppelt ist,
**dadurch gekennzeichnet, dass** zumindest in einer Teilstrecke zwischen einer der geöffneten Stellung der Mehrscheibenkupplung (20) entsprechenden Öffnungsstellung der Anpressplatte (26) und einer der geschlossenen Stellung der Mehrscheibenkupplung (20) bei verschlissenen Belagringen (28, 30) entsprechenden maximalen Schließstellung der Anpressplatte (26) ein aktuelles Wegübersetzungsverhältnis i(s_{A}) der axialen Verlagerung der Anpressplatte (26) zu der axialen Verlagerung der in axialer Richtung von der Anpressplatte (26) am weitesten entfernten Zwischenplatte (34) bei einer axialen Position s_{A} der Anpressplatte (26) von i(s_{A}) = n+1 abweicht
und/oder ein aktuelles Wegübersetzungsverhältnis i(s_{A})ⱼ der axialen Verlagerung der Anpressplatte (26) zu der axialen Verlagerung einer j-ten Zwischenplatte (34) bei einer axialen Position s_{A} der Anpressplatte (26) von i(s_{A})ⱼ = (n+1)/j abweicht, wobei j von der Gegenplatte (22) aus in Richtung Anpressplatte (26) gezählt ist.

2. Mehrscheibenkupplung nach Anspruch 1 **dadurch gekennzeichnet, dass** für das aktuelle Wegübersetzungsverhältnis i(s_{A}) zumindest in einer Teilstrecke zwischen der Öffnungsstellung der Anpressplatte (26) und der maximalen Schließstellung der Anpressplatte (26), insbesondere zumindest in einer Teilstrecke zwischen der Öffnungsstellung der Anpressplatte (26) und einer der geschlossenen Stellung der Mehrscheibenkupplung (20) bei unverschlissenen Belagringen entsprechenden Schließstellung der Anpressplatte (26), 0,00 < |i(s_{A}) - (n+1)|/(n+1) ≤ 5,0, insbesondere 0,01 ≤ |i(s_{A}) - (n+1)|/(n+1) ≤ 2,5, vorzugsweise 0,05 ≤ |i(s_{A}) - (n+1)|/(n+1) ≤ 1,5, weiter bevorzugt 0,07 ≤ |i(s_{A}) - (n+1)|/(n+1) ≤ 1,0 und besonders bevorzugt 0,10 ≤ |i(s_{A}) - (n+1)|/(n+1) ≤ 0,8 gilt.

3. Mehrscheibenkupplung nach Anspruch 1 oder 2 **dadurch gekennzeichnet, dass** sich das aktuelle Wegübersetzungsverhältnis i(s_{A}) zwischen der Öffnungsstellung der Anpressplatte (26) und der maximalen Schließstellung der Anpressplatte (26), insbesondere zwischen der Öffnungsstellung der Anpressplatte (26) und einer der geschlossenen Stellung der Mehrscheibenkupplung (20) bei unverschlissenen Belagringen (28, 30) entsprechenden Schließstellung der Anpressplatte (26), mindestens einmal ändert, wobei insbesondere sich das aktuelle Wegübersetzungsverhältnis i(s_{A}) kontinuierlich ändert.

4. Mehrscheibenkupplung nach einem der Ansprüche 1 bis 3 **dadurch gekennzeichnet, dass** der erste Belagring (28) eine erste Belagfederung (50) und der zweite Belagring (30) eine zweite Belagfederung (54) aufweist, wobei die erste Belagfederung (50) maximal um eine erste axiale Wegstrecke s_{BF1} und die zweite Belagfederung (54) maximal um eine von der erste axiale Wegstrecke s_{BF1} verschiedene zweite axiale Wegstrecke s_{BF2} in axialer Richtung komprimierbar ist, wobei insbesondere 0,00 < 2|s_{BF1} - s_{BF2}|/(s_{BF1} + s_{BF2}) ≤ 2,0, vorzugsweise 0,05 ≤ 2|s_{BF1} - s_{BF2}|/(s_{BF1} + s_{BF2}) ≤ 1,7, weiter bevorzugt 0,10 ≤ 2|s_{BF1} - s_{BF2}|/(s_{BF1} + s_{BF2}) ≤ 1,5 und besonders bevorzugt 0,20 ≤ 2|s_{BF1} - s_{BF2}|/(s_{BF1} + s_{BF2}) ≤ 1,0 gilt.

5. Mehrscheibenkupplung nach einem der Ansprüche 1 bis 4 **dadurch gekennzeichnet, dass** der erste Belagring (28) einen ersten Reibbelag (48) mit einer wirksamen axialen ersten Reibbelagdicke d₁ und der zweite Belagring (30) einen zweiten Reibbelag (52) mit einer von der ersten Reibbelagdicke d₁ verschiedenen wirksamen axialen zweiten Reibbelagdicke d₂ aufweist, wobei insbesondere 0,0 < 2|d₁ - d₂|/(dⱼ + d₂) < 2,0, vorzugsweise 0,01 ≤ 2|d₁ - d₂|/(d₁ + d₂) ≤ 1,8, weiter bevorzugt 0,05 ≤ 2|d₁ - d₂|/(d₁ + d₂) ≤ 1,5 und besonders bevorzugt 0,10 ≤ 2|d₁ - d₂|/(d₁ + d₂) ≤ 1,0 gilt.

6. Mehrscheibenkupplung nach einem der Ansprüche 1 bis 5 **dadurch gekennzeichnet, dass** bei einer Bewegung der Anpressplatte (26) von der Öffnungsstellung in einer der geschlossenen Stellung der Mehrscheibenkupplung (20) bei unverschlissenen Belagringen (28, 30) entsprechenden Schließstellung der Anpressplatte (26) der erste Belagring (28) und der zweite Belagring (30) zu unterschiedlichen Zeitpunkten reibschlüssig verpressbar sind und/oder das Verpressen zu unterschiedlichen Zeitpunkten beginnt und/oder endet.

7. Mehrscheibenkupplung nach einem der Ansprüche 1 bis 6 **dadurch gekennzeichnet, dass** zur Ausbildung des Koppelmechanismus (44) die Anpressplatte (26) über eine erste Blattfeder (38) mit der Gegenplatte (22) verbunden ist, die Zwischenplatte (34) über eine zweite Blattfeder (40) mit der Gegenplatte (22) verbunden ist und die Zwischenplatte (34) über einen an der ersten Blattfeder (38) oder der zweiten Blattfeder (40) anliegenden Kontaktbolzen (42) und/oder einem anderen eine Kontaktstelle (56, 64) ausbildenden Element an der Anpressplatte (26) abgestützt ist.

8. Mehrscheibenkupplung nach Anspruch 7 **dadurch gekennzeichnet, dass** die Zwischenplatte (34) zur Änderung des aktuellen Wegübersetzungsverhältnisses i(s_{A}) über mindestens zwei in Umfangsrichtung und/oder in radialer Richtung zueinander versetzte Kontaktstellen (56, 64) an der ersten Blattfeder (38) abstützbar ist, wobei insbesondere die mindestens zwei Kontaktstellen (56, 64) Teil des gleichen Kontaktbolzens (42) sind.

9. Mehrscheibenkupplung nach Anspruch 8 **dadurch gekennzeichnet, dass** der Kontaktbolzen (42) eine zur ersten Blattfeder (38) weisende, insbesondere im Wesentlichen konvexe, Kontaktkontur (66) zur, insbesondere kontinuierlichen, Änderung des aktuellen Wegübersetzungsverhältnisses i(s_{A}) zumindest in einer Teilstrecke der axialen Verlagerung der Anpressplatte (26) aufweist.

10. Mehrscheibenkupplung nach einem der Ansprüche 6 bis 9 **dadurch gekennzeichnet, dass** der Kontaktbolzen (42) drehgesichert mit der Zwischenplatte (34) verbunden ist.

11. Mehrscheibenkupplung nach einem der Ansprüche 6 bis 10 **dadurch gekennzeichnet, dass** der Kontaktbolzen (42) in axialer Richtung nachgiebig mit einer Federkraft vorgespannt ist und/oder der Kontaktbolzen (42) mit einem Endanschlag versehen ist, wobei der Endanschlag die Bewegung des Kontaktbolzens (42) in eine Axialrichtung sperrt und in eine entgegen gesetzte Axialrichtung zulässt.

12. Mehrscheibenkupplung nach einem der Ansprüche 6 bis 11 **dadurch gekennzeichnet, dass** in der maximalen Schließstellung der Anpressplatte (26), insbesondere in einer der geschlossenen Stellung der Mehrscheibenkupplung (20) bei unverschlissenen Belagringen (28, 30) entsprechenden Schließstellung der Anpressplatte (26), der Kontaktbolzen (42) die erste Blattfeder (38) in axialer Richtung durchbiegt.

13. Mehrscheibenkupplung nach einem der Ansprüche 6 bis 12 **dadurch gekennzeichnet, dass** der Kontaktbolzen (42) mit der Zwischenplatte (34) vernietet ist, wobei eine die erste Blattfeder (38) kontaktierende Kontaktstelle (56, 64, 66) des Kontaktbolzens (42) in radialer Richtung versetzt zu einem Nietschaft (74) des Kontaktbolzens (42) angeordnet ist, wobei insbesondere die Kontaktstelle (56, 64, 66) in der Richtung der Nietschaftachse gesehen komplett neben dem Nietschaftquerschnitt liegt und/oder sich in Verlängerung des Nietschafts eine nur für die Montage genutzte Auflagefläche befindet, wobei die Auflagefläche den Nietschaftquerschnitt komplett abdeckt.

## Claims

1. Multiple disc clutch, in particular double disc clutch, for coupling a drive shaft (12) of a motor vehicle engine to at least one transmission input shaft (16, 18), in particular for a double clutch (10), having
a counterplate (22) for the introduction of a torque from the drive shaft (12),
a clutch disc (32) for the output of the torque to the transmission input shaft (16, 18), the clutch disc (32) having a first lining ring (28) for the frictionally locking transmission of torque and a second lining ring (30) which can be moved axially relative to the first lining ring (28) for the frictionally locking transmission of torque,
an intermediate plate (34) which can be moved axially relative to the counterplate (22), the intermediate plate (34) being arranged in the axial direction between the first lining ring (28) and the second lining ring (30), and
a pressure plate (26) which can be moved axially relative to the counterplate (22) by an actuating element (24) for pressing the clutch disc (32) in a frictionally locking manner, the first lining ring (28) being arranged in the axial direction between the pressure plate (26) and the intermediate plate (34), and the second lining ring (30) being arranged between the intermediate plate (34) and the counterplate (22),
a number of n intermediate plates (34) and a number of n+1 lining rings (28, 30) being provided,
the movement of the intermediate plate (34) in the axial direction being coupled to the movement of the pressure plate (26) via a coupling mechanism (44) in the axial direction,
**characterized in that**, at least in a part section between an open position of the pressure plate (26), which open position corresponds to the open position of the multiple disc clutch (20), and a maximum closed position of the pressure plate (26), which maximum closed position corresponds to the closed position of the multiple disc clutch (20) in the case of worn lining rings (28, 30), an actual travel transmission ratio i(s_{A}) of the axial movement of the pressure plate (26) to the axial movement of the intermediate plate (34) which is furthest away in the axial direction from the pressure plate (26) differs from i(s_{A}) = n+1 in the case of an axial position s_{A} of the pressure plate (26),
and/or an actual travel transmission ratio i(s_{A})ⱼ of the axial movement of the pressure plate (26) to the axial movement of a j-th intermediate plate (34) differs from i(s_{A})ⱼ = (n+1)/j in the case of an axial position s_{A} of the pressure plate (26), where j is counted from the counterplate (22) in the direction of the pressure plate (26) .

2. Multiple disc clutch according to Claim 1, **characterized in that**, at least in a part section between the open position of the pressure plate (26) and the maximum closed position of the pressure plate (26), in particular at least in a part section between the open position of the pressure plate (26) and a closed position of the pressure plate (26), which closed position corresponds to the closed position of the multiple disc clutch (20) in the case of unworn lining rings, it applies for the actual travel transmission ratio i(s_{A}) that 0.00 < |i(s_{A}) - (n+1) | /(n+1) ≤ 5.0, in particular 0.01 ≤ |i(s_{A}) - (n+1) | /(n+1) ≤ 2.5, preferably 0.05 ≤ | i(S_{A}) - (n+1) | (n+1) ≤ 1.5, further preferably 0.01 ≤ |i(s_{A}) - (n+1) | /(n+1) ≤ 1.0, and particularly preferably 0.10 ≤ |i(s_{A}) - (n+1) | / (n+1) ≤ 0.8.

3. Multiple disc clutch according to Claim 1 or 2, **characterized in that** the actual travel transmission ratio i(s_{A}) changes at least once between the open position of the pressure plate (26) and the maximum closed position of the pressure plate (26), in particular between the open position of the pressure plate (26) and a closed position of the pressure plate (26), which closed position corresponds to the closed position of the multiple disc clutch (20) in the case of unworn lining rings (28, 30), the actual travel transmission ratio i(s_{A}) changing continuously, in particular.

4. Multiple disc clutch according to one of Claims 1 to 3, **characterized in that** the first lining ring (28) has a first lining spring system (50) and the second lining spring (30) has a second lining spring system (54), it being possible for the first lining spring system (50) to be compressed in the axial direction at most by a first axial travel distance s_{BF1} and for the second lining spring system (54) to be compressed in the axial direction at most by a second axial travel distance s_{BF2} which is different from the first axial travel distance s_{BF1}, it being the case that, in particular, 0.00 < 2 | s_{BF1} - s_{BF2} | / (s_{BF1} + s_{BF2}) ≤ 2.0, preferably 0.05 ≤ 2 | s_{BF1} - s_{BF2} | / (s_{BF1} + s_{BF2}) ≤ 1.7, further preferably 0.10 ≤ 2 | s_{BF1} - s_{BF2} | / (s_{BF1} + s_{BF2}) ≤ 1.5, and particularly preferably 0.20 ≤ 2 | s_{BF1} - s_{BF2} | / (s_{BF1} + s_{BF2}) ≤ 1.0.

5. Multiple disc clutch according to one of Claims 1 to 4, **characterized in that** the first lining ring (28) has a first friction lining (48) with an active axial first friction lining thickness d₁, and the second lining ring (30) has a second friction lining (52) with an active axial second friction lining thickness d₂ which is different from the first friction lining thickness d₁, it being the case that, in particular, 0.0 < 2 | d₁ - d₂ | / (d₁ + d₂) < 2.0, preferably 0.01 ≤ 2 | d₁ - d₂ | /(d₁ + d₂) ≤ 1.8, further preferably 0.05 ≤ 2 | d₁ - d₂ | /(d₁ + d₂) ≤ 1.5, and particularly preferably 0.10 ≤ 2 | d₁ - d₂ | /(d₁ + d₂) ≤ 1.0.

6. Multiple disc clutch according to one of Claims 1 to 5, **characterized in that**, in the case of a movement of the pressure plate (26) from the open position into a closed position of the pressure plate (26), which closed position corresponds to the closed position of the multiple disc clutch (20) in the case of unworn lining rings (28, 30), the first lining ring (28) and the second lining ring (30) can be pressed in a frictionally locking manner at different times and/or the pressing begins and/or ends at different times.

7. Multiple disc clutch according to one of Claims 1 to 6, **characterized in that**, in order to configure the coupling mechanism (44), the pressure plate (26) is connected to the counterplate (22) via a first leaf spring (38), the intermediate plate (34) is connected to the counterplate (22) via a second leaf spring (40), and the intermediate plate (34) is supported on the pressure plate (26) via a contact pin (42) which bears against the first leaf spring (38) or the second leaf spring (40) and/or another element which configures a contact point (56, 64).

8. Multiple disc clutch according to Claim 7, **characterized in that**, in order to change the actual travel transmission ratio i(s_{A}), the intermediate plate (34) can be supported on the first leaf spring (38) via at least two contact points (56, 64) which are offset with respect to one another in the circumferential direction and/or in the radial direction, the at least two contact points (56, 64) being, in particular, part of the same contact pin (42).

9. Multiple disc clutch according to Claim 8, **characterized in that** the contact pin (42) has an, in particular, substantially convex contact contour (66) which points towards the first leaf spring (38) for the (in particular, continuous) change of the actual travel transmission ratio i(s_{A}) at least in a part section of the axial movement of the pressure plate (26).

10. Multiple disc clutch according to one of Claims 6 to 9, **characterized in that** the contact pin (42) is connected in a rotationally secured manner to the intermediate plate (34).

11. Multiple disc clutch according to one of Claims 6 to 10, **characterized in that** the contact pin (42) is prestressed with a spring force in a resilient manner in the axial direction and/or the contact pin (42) is provided with an end stop, the end stop blocking the movement of the contact pin (42) in one axial direction and permitting it in an opposed axial direction.

12. Multiple disc clutch according to one of Claims 6 to 11, **characterized in that**, in the maximum closed position of the pressure plate (26), in particular in a closed position of the pressure plate (26), which closed position corresponds to the closed position of the multiple disc clutch (20) in the case of unworn lining rings (28, 30), the contact pin (42) deflects the first leaf spring (38) in the axial direction.

13. Multiple disc clutch according to one of Claims 6 to 12, **characterized in that** the contact pin (42) is riveted to the intermediate plate (34), a contact point (56, 64, 66) of the contact pin (42), which contact point (56, 64, 66) makes contact with the first leaf spring (38), being arranged offset in the radial direction with respect to a rivet shank (74) of the contact pin (42), the contact point (56, 64, 66), in particular, lying completely next to the rivet shank cross section as viewed in the direction of the rivet shank axis, and/or a bearing face which is utilized only for mounting being situated in an extension of the rivet shank, the bearing face covering the rivet shank cross section completely.

## Revendications

1. Embrayage multidisques, en particulier embrayage à deux disques pour l'accouplement d'un arbre d'entraînement (12) d'un moteur de véhicule automobile avec au moins un arbre d'entrée de boîte de vitesses (16, 18), en particulier pour un double embrayage (10), comprenant
une plaque conjuguée (22) pour l'introduction d'un couple par l'arbre d'entraînement (12),
un disque d'embrayage (32) pour la sortie du couple au niveau de l'arbre d'entrée de boîte de vitesses (16, 18), le disque d'embrayage (32) présentant une première bague de garniture (28) pour le transfert de couple par engagement par friction et une deuxième bague de garniture (30) déplaçable axialement par rapport à la première bague de garniture (28) pour le transfert de couple par engagement par friction,
une plaque intermédiaire (34) déplaçable axialement par rapport à la plaque conjuguée (22), la plaque intermédiaire (34) étant disposés dans la direction axiale entre la première bague de garniture (28) et la deuxième bague de garniture (30), et
une plaque de pressage (26) déplaçable axialement par un élément d'actionnement (24) par rapport à la plaque conjuguée (22) pour le pressage par engagement par friction du disque d'embrayage (32), la première bague de garniture (28) étant disposée dans la direction axiale entre la plaque de pressage (26) et la plaque intermédiaire (34), et la deuxième bague de garniture (30) étant disposée entre la plaque intermédiaire (34) et la plaque conjuguée (22),
une pluralité de n plaques intermédiaires (34) et une pluralité de n+1 bagues de garniture (28, 30) étant prévues,
le déplacement de la plaque intermédiaire (34) dans la direction axiale étant accouplé au déplacement de la plaque de pressage (26) dans la direction axiale par le biais d'un mécanisme de couplage (44),
**caractérisé en ce**
**qu'**au moins dans une section partielle entre une position d'ouverture de la plaque de pressage (26) correspondant à la position ouverte de l'embrayage multidisques (20) et une position de fermeture maximale de la plaque de pressage (26) correspondant à la position fermée de l'embrayage multidisques (20) lorsque les bagues de friction (28, 30) sont usées, un rapport de transmission de déplacement actuel i(s_{A}) du décalage axial de la plaque de pressage (26) par rapport au décalage axial de la plaque intermédiaire (34) le plus éloigné dans la direction axiale de la plaque de pressage (26) pour une position axiale S_{A} de la plaque de pressage (26), s'écarte de i(s_{A}) = n+1,
et/ou un rapport de transmission de course actuel i(s_{A})ⱼ du décalage axial de la plaque de pressage (26) par rapport au décalage axial d'une j-ième plaque intermédiaire (34) pour une position axiale S_{A} de la plaque de pressage (26) s'écarte de i(s_{A})ⱼ = (n+1)/j , j étant compté à partir de la plaque conjuguée (22) dans la direction de la plaque de pressage (26).

2. Embrayage multidisques selon la revendication 1, **caractérisé en ce que** pour le rapport de transmission de course actuel i(s_{A}), au moins dans une section partielle entre la position d'ouverture de la plaque de pressage (26) et la position de fermeture maximale de la plaque de pressage (26), en particulier au moins dans une section partielle entre la position d'ouverture de la plaque de pressage (26) et une position de fermeture de la plaque de pressage (26) correspondant à la position fermée de l'embrayage multidisques (20) lorsque les bagues de garniture ne sont pas usées, on a 0,00 < |i(s_{A}) - (n+1)|/(n+1) ≤ 5,0, en particulier 0,01 ≤|i(s_{A}) - (n+1)|/(n+1) ≤ 2,5, de préférence 0,05 ≤ |i(s_{A}) - (n+1)|/(n+1) ≤ 1,5, plus préférablement 0,07 ≤ |i(s_{A}) - (n+1)|/(n+1) ≤ 1,0 et particulièrement préférablement 0,10 ≤ |i(s_{A}) - (n+1)|/(n+1) ≤ 0,8.

3. Embrayage multidisques selon la revendication 1 ou 2, **caractérisé en ce que** le rapport de transmission de course actuel i(s_{A}) entre la position d'ouverture de la plaque de pressage (26) et la position de fermeture maximale de la plaque de pressage (26), en particulier entre la position d'ouverture de la plaque de pressage (26) et une position de fermeture de la plaque de pressage (26) correspondant à la position fermée de l'embrayage multidisques (20) lorsque les bagues de garniture (28, 30) sont pas usées, varie au moins une fois, en particulier le rapport de transmission de course actuel i(s_{A}) varie de manière continue.

4. Embrayage multidisques selon l'une quelconque des revendications 1 à 3, **caractérisé en ce que** la première bague de garniture (28) présente un premier support élastique de garniture (50) et la deuxième bague de garniture (30) présente un deuxième support élastique de garniture (54), le premier support élastique de garniture (50) pouvant être comprimé au maximum d'une première section de course axiale s_{BF1} et le deuxième support élastique de garniture (54) pouvant être comprimé dans la direction axiale au maximum une deuxième section de course axiale S_{BF2} différente de la première section de course axiale S_{BF1}, où l'on a notamment 0,00 < 2|S_{BF1} - S_{BF2}|/(S_{BF1} + S_{BF2}) ≤ 2,0, de préférence 0,05 ≤ 2 |S_{BF1} - S_{BF2}|/(S_{BF1} + SBF2) ≤ 1,7, plus préférablement 0,10 ≤ 2 |S_{BF1} - S_{BF2}|/ (S_{BF1} + S_{BF2}) ≤ 1,5 et particulièrement préférablement 0,20 ≤ 2 |S_{BF1} - S_{BF2}|/(S_{BF1} + S_{BF2}) ≤ 1,0.

5. Embrayage multidisques selon l'une quelconque des revendications 1 à 4, **caractérisé en ce que** la première bague de garniture (28) présente une première garniture de friction (48) avec une première épaisseur de garniture de friction axiale active d₁ et la deuxième bague de friction (30) présente une deuxième garniture de friction (52) avec une deuxième épaisseur de garniture de friction axiale active d₂ différente de la première épaisseur de garniture de friction d₁, où l'on a notamment 0,0 < 2|d₁ - d₂|(d₁ + d₂) < 2,0, de préférence 0,1 ≤ 2|d₁ - d₂|/(d₁ + d₂) ≤ 1,8, plus préférablement 0,05 ≤ 2|d₁ - d₂|/(d₁ + d₂) ≤ 1,5, et particulièrement préférablement 0,10 ≤ 2|d₁ - d₂|/(d₁ + d₂) ≤ 1,0.

6. Embrayage multidisques selon l'une quelconque des revendications 1 à 5, **caractérisé en ce que** dans le cas d'un déplacement de la plaque de pressage (26) de la position d'ouverture dans une position de fermeture de la plaque de pressage (26) correspondant à la position fermée de l'embrayage multidisques (20) lorsque les bagues de garniture (28, 30) sont pas usées, la première bague de garniture (28) et la deuxième bague de garniture (30) peuvent être pressées par engagement par friction à des instants différents et/ou le pressage commence et/ou se termine à des instants différents.

7. Embrayage multidisques selon l'une quelconque des revendications 1 à 6, **caractérisé en ce que** pour la réalisation du mécanisme de couplage (44), la plaque de pressage (26) est connectée par le biais d'un premier ressort à lame (38) à la plaque conjuguée (22), la plaque intermédiaire (34) est connectée par le biais d'un deuxième ressort à lame (40) à la plaque conjuguée (22) et la plaque intermédiaire (34) est supportée par le biais d'un boulon de contact (42) s'appliquant contre le premier ressort à lame (38) où le deuxième ressort à lame (40) et/ou par le biais d'un autre élément réalisant un point de contact (56, 64) au niveau de la plaque de pressage (26).

8. Embrayage multidisques selon la revendication 7, **caractérisé en ce que** la plaque intermédiaire (34) pour faire varier le rapport de transmission de course actuel i(s_{A}), peut être supportée par le biais d'au moins deux points de contact (56, 64) décalés l'un par rapport à l'autre dans la direction périphérique et/ou dans la direction radiale sur le premier ressort à lame (38), les au moins deux points de contact (56, 64) faisant notamment partie du même boulon de contact (42).

9. Embrayage multidisques selon la revendication 8, **caractérisé en ce que** le boulon de contact (42) présente un contour de contact (66) tourné vers le premier ressort à lame (38), notamment essentiellement convexe, pour faire varier, notamment de manière continue, le rapport de transmission de course actuel i(SA) au moins dans une section partielle du décalage axial de la plaque de pressage (26).

10. Embrayage multidisques selon l'une quelconque des revendications 6 à 9, **caractérisé en ce que** le boulon de contact (42) est connecté de manière fixée en rotation à la plaque intermédiaire (34).

11. Embrayage multidisques selon l'une quelconque des revendications 6 à 10, **caractérisé en ce que** le boulon de contact (42) est précontraint dans la direction axiale de manière flexible avec une force de ressort et/ou le boulon de contact (42) est pourvue d'une butée de fin de course, la butée de fin de course bloquant le mouvement du boulon de contact (42) dans une direction axiale et l'autorisant dans une direction axiale opposée.

12. Embrayage multidisques selon l'une quelconque des revendications 6 à 11, **caractérisé en ce que** dans la position de fermeture maximale de la plaque de pressage (26), en particulier dans une position de fermeture de la plaque de pressage (26) correspondant à la position fermée de l'embrayage multidisques (20) lorsque les bagues de garniture (28, 30) ne sont pas usées, le boulon de contact (42) fait fléchir le premier ressort à lame (38) dans la direction axiale.

13. Embrayage multidisques selon l'une quelconque des revendications 6 à 12, **caractérisé en ce que** le boulon de contact (42) est rivetée à la plaque intermédiaire (34), un point de contact (56, 64, 66) du boulon de contact (42) venant en contact avec le premier ressort à lame (38) étant disposé de manière décalée dans la direction radiale par rapport à une tige de rivet (74) du boulon de contact (42), en particulier le point de contact (56, 64, 66), vu dans la direction de l'axe de la tige de rivet, étant situé complètement à côté de la section transversale de la tige de rivet et/ou une surface d'appui utilisée seulement pour le montage se trouvant dans le prolongement de la tige de rivet, la surface d'appui recouvrant complètement la section transversale de la tige de rivet.
